(19) Europäisches Patentamt
European Patent Office
Office européen des brevets

(11) **EP 4 600 035 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
**B32B 15/01** [(2006.01)]  **C23C 22/36** [(2006.01)]

(21) Application number: **23874958.4**

(52) Cooperative Patent Classification (CPC):
**B32B 15/01; C23C 22/00; C23C 22/36**

(22) Date of filing: **06.10.2023**

(86) International application number:
**PCT/JP2023/036512**

(87) International publication number:
**WO 2024/075833 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **06.10.2022   JP 2022161691**
**06.10.2022   JP 2022161692**

(71) Applicant: **NIPPON STEEL CORPORATION**
**Chiyoda-ku**
**Tokyo 100-8071 (JP)**

(72) Inventors:
• **NISHIDA Yoshikatsu**
**Tokyo 100-8071 (JP)**
• **SHOJI Hiromasa**
**Tokyo 100-8071 (JP)**

(74) Representative: **Vossius & Partner**
**Patentanwälte Rechtsanwälte mbB**
**Siebertstrasse 3**
**81675 München (DE)**

(54) **SURFACE-TREATED STEEL SHEET**

(57)     The surface-treated steel sheet is a surface-treated steel sheet including a base steel sheet, a plating layer formed on a surface of the base steel sheet, and a coating formed on a surface of the plating layer, in which the plating layer has a Zn concentration of 40 mass% or more and 100 mass% or less, and a Mg concentration of 0 mass% or more and less than 4.0 mass%, and a maximum concentration of Ti in mass%, a maximum concentration of Zr in mass%, and a maximum concentration of V in mass% from the interface to a center in the thickness direction from the interface to the surface satisfy a pre-determined relationship, and an average concentration of C in mass% in the center portion of the coating, a maximum concentration of Mg in mass% in the boundary region of the coating, an average concentration of Mg in mass% in the center portion of the coating, a maximum concentration of F in mass% in the boundary region of the coating, an average concentration of F in mass% in the center portion of the coating, and an average concentration of Si in mass% in the center portion of the coating satisfy a predetermined relationship.

FIG. 1

EP 4 600 035 A1

**Description**

TECHNICAL FIELD

The present invention relates to a surface-treated steel sheet.

The present application claims priority based on Japanese Patent Application No. 2022-161691 filed in Japan on October 6, 2022, and Japanese Patent Application No. 2022-161692 filed in Japan on October 6, 2022, the contents of which are incorporated herein by reference.

BACKGROUND ART

Conventionally, a plated steel sheet (zinc-based-plated steel sheet) in which a plating layer mainly composed of a zinc concentration is formed on a surface of a steel sheet has been used in a wide range of applications such as automobiles, building materials, and home electric appliances.

In addition, for the purpose of imparting corrosion resistance, coating adhesion, and the like to the surface of such a zinc-based-plated steel sheet, a method of performing a chromate treatment with a treatment solution containing chromic acid, dichromic acid, or a salt thereof as a main component, a method of performing a treatment using a metal surface treatment agent containing no chromium, a method of performing a phosphate treatment, a method of performing a treatment with a silane coupling agent alone, a method of performing an organic resin coating treatment, and the like are generally known and practically used.

In particular, in recent years, a metal surface treatment agent containing no chromium has been developed under various laws and regulations on a hexavalent chromium compound that may adversely affect the environment and the human body. As the metal surface treatment agent not containing chromium, there is a technique of using an oxide or a hydroxide of a group 4 metal such as Ti or Zr.

For example, Patent Document 1 discloses a chromate-free chemical treatment steel sheet in which a zinc-plated steel sheet or a zinc alloy-plated steel sheet is used as a substrate, and a chemical conversion-treated film in which an oxide or hydroxide of a valve metal in which an oxide exhibits high insulation resistance and a fluoride coexist is formed on the surface of the substrate.

In addition, Patent Document 2 discloses a hot-dip zinc alloy-plated steel sheet having exceptional corrosion resistance in which a chemical conversion film mainly composed of one or two or more of a hydroxide, an oxide, an oxyacid, an oxyacid salt, and a fluoride of a valve metal is formed on a Mg-containing zinc alloy-plated layer via an interface reaction layer containing one kind or two or more kinds selected from magnesium fluoride, magnesium phosphate, and a composite compound of magnesium and a valve metal oxyacid salt. In Patent Document 2, by using a zinc alloy-plated layer containing Mg as a base, an interface reaction layer containing Mg is formed to exhibit high white rust resistance (corrosion resistance).

In addition, Patent Document 3 discloses a hot-dip zinc alloy-plated steel sheet having exceptional corrosion resistance in which a composite chemical conversion film of Ti and V is formed on a Zn-Al alloy-plated layer via an Al-F interface reaction layer. In Patent Document 3, a reaction layer of Al-F is formed by using a zinc alloy-plated layer containing Al as a base to exhibit high white rust resistance.

Patent Document 4 discloses a chromate-free precoated metal sheet including: a metal sheet; and an upper layer coating film ($\alpha$) formed on at least one surface of the metal sheet, wherein the chromate-free precoated metal sheet has an underlayer treatment layer ($\beta$) between the metal sheet and the upper layer coating film ($\alpha$), and the underlayer treatment layer ($\beta$) is formed by blending (1) a film-forming component (X) containing: an organosilicon compound (C) obtained by blending and reacting a silane coupling agent (A) containing an amino group in the molecule and a silane coupling agent (B) containing a glycidyl group in the molecule, wherein the organosilicon compound (C) has a cyclic siloxane bond and a chain siloxane bond in the structure thereof, and an abundance ratio between the cyclic siloxane bond and the chain siloxane bond represented by a ratio [C1/C2] between an absorbance (C1) at 1,090 to 1,100 cm$^{-1}$ indicating the cyclic siloxane bond according to an FT-IR reflection method and an absorbance (C2) at 1,030 to 1,040 cm$^{-1}$ indicating the chain siloxane bond is 0.4 to 2.5; and at least one cationic organic resin (D) selected from a polyurethane resin, a phenol resin, and epoxy resin; and (2) an inhibitor component (Y) containing: at least one metal compound (E) selected from a titanium compound and a zirconium compound; a phosphate compound (J); and a fluorine compound (F), wherein the inhibitor component (Y) need not contain the fluorine compound (F) when the metal compound (E) is a fluorometallic complex compound (E'), thereby adjusting an underlayer treatment agent, and applying and drying the underlayer treatment agent.

Citation List

Patent Document

Patent Document 1: Japanese Unexamined Patent Application, First Publication No. 2002-194558
Patent Document 2: Japanese Unexamined Patent Application, First Publication No. 2007-23309
Patent Document 3: Japanese Unexamined Patent Application, First Publication No. 2003-306777
Patent Document 4: Japanese Unexamined Patent Application, First Publication No. 2012-237065

SUMMARY OF INVENTION

Technical Problem

The techniques disclosed in Patent Documents 1 to 3 are exceptional techniques that have been put to practical use as a surface-treated steel sheet subjected to chromate-free surface treatment, which is exceptional in corrosion resistance. In order to improve the corrosion resistance of the chromate-free treatment, a technique of forming a reaction layer containing a metal element contained in a plating layer has been used as described in Patent Documents 2 and 3. However, it has been found that there is a case where corrosion resistance is insufficient in these prior arts due to recent advancement of customer needs.

For example, in a zinc-plated steel sheet using plating not containing Mg or Al, it is difficult to form the reaction layer as described in Patent Document 2 or 3, and there has been a problem that corrosion resistance of a flat part (flat portion) and a worked portion is insufficient. In addition, also in the case of a zinc-based-plated steel sheet using plating containing Mg or Al in a plating layer, when a chemical conversion coating (film) is formed in a continuous hot-dip plated steel sheet manufacturing line, the time from the application of a chemical treatment solution to a surface of a zinc-plated steel sheet to the formation of a chemical conversion coating by drying is as very short as within 5 seconds from the viewpoint of productivity, and thus Mg and Al contained in a Zn phase of zinc alloy plating are extremely small, so that there has been a problem that the reaction layer is hardly formed on the Zn phase of the plating, and corrosion resistance is insufficient.

In addition, in Patent Document 4, it is necessary to contain an organic resin as a film-forming component. Therefore, even if corrosion resistance and coating film adhesion are exceptional, there is a problem that conductivity is poor.

For this reason, a surface-treated steel sheet exceptional in corrosion resistance (white rust resistance) and conductivity is desired in both the worked portion and the flat portion.

An object of the present invention is to provide a surface-treated steel sheet exceptional in corrosion resistance and conductivity on the premise of a surface-treated steel sheet having a chromate-free chemical conversion coating on a surface of a zinc-based plated steel having a plating layer containing zinc or a zinc alloy on a surface of a steel.

Solution to Problem

The corrosion resistance of the surface-treated steel having a chemical conversion coating is improved as the barrier property (property of blocking permeation of corrosion factors such as moisture and chloride ions) of the chemical conversion coating is higher. In addition, in a portion where the chemical conversion coating is damaged due to defects or the like, corrosion resistance such as white rust resistance is improved as the effect (inhibitor effect) of preventing corrosion of the plating layer due to elution of a substance (mainly a metal element) in the chemical conversion coating when moisture adheres is higher.

As described above, the chemical conversion coatings disclosed in Patent Documents 1 to 3 are coatings having both the barrier property and the inhibitor effect, but in an environment where higher white rust resistance than before is desired, each property is not sufficient, and there is a concern that the plating layer is corroded and white rust is generated early.

In view of such circumstances, the present inventors have studied a method for enhancing the barrier property and the inhibitor effect of a chemical conversion coating on the premise of a chemical conversion coating not containing an organic resin from the viewpoint of conductivity.

As a result, the present inventors have found that when a chemical conversion coating is formed on a surface of a zinc-plated layer or a zinc alloy-plated layer in a short time, by forming a plurality of sites where a specific element is concentrated in addition to controlling the concentration of each element from the vicinity of an interface between a Zn phase of the zinc-plated layer or the zinc alloy-plated layer and the chemical conversion coating and a surface of the chemical conversion coating, the barrier property of the chemical conversion coating is improved, and corrosion resistance can be dramatically improved.

The present invention has been made in view of the above findings. The gist of the present invention is as follows.

[1] A surface-treated steel sheet according to an aspect of the present invention includes:

a base steel sheet;
a plating layer formed on a surface of the base steel sheet; and
a coating formed on a surface of the plating layer,
wherein the plating layer has a Zn concentration of 40 mass% or more and 100 mass% or less and a Mg concentration of 0 mass% or more and less than 4.0 mass%, and
when the concentration of C, O, F, Mg, Al, Si, P, Ti, V, Zn, and Zr is continuously measured from the plating layer toward a surface of the surface-treated steel sheet by line analysis in a thickness direction,
a position where the concentration of Zn becomes 35.0 mass% or less for the first time is defined as an interface between the plating layer and the coating, and
a region including the interface in the range of 10 nm on the side of the plating layer and the range of 15 nm on the side of the coating from the interface in the thickness direction is defined as a boundary region, and
when the range of 10 nm from the center of the interface and a surface of the coating to the surface side in the thickness direction is defined as a center portion of the coating,
one or more of the following formulas (1) to (3) and (4) to (12) are satisfied.

$$Dti \geq 5.0 \quad (1)$$

$$Dzr \geq 5.0 \quad (2)$$

$$Dv \geq 5.0 \quad (3)$$

$$Dti + Dzr + Dv \leq 25.0 \quad (4)$$

$$Bc < 10.0 \quad (5)$$

$$5.0/M \leq Amg \leq 25.0 \quad (6)$$

$$0.5 \leq Bmg \leq 5.0 \quad (7)$$

$$15.0/M \leq Af \leq 40.0 \quad (8)$$

$$0.5 \leq Bf \leq 15.0 \quad (9)$$

$$Amg/Bmg \geq 2.0 \quad (10)$$

$$Af/Bf \geq 2.0 \quad (11)$$

$$Bsi < 5.0 \quad (12)$$

wherein the Dti is a maximum concentration of Ti in mass% from the interface to a center in the thickness direction from the interface to the surface,
the Dzr is a maximum concentration of Zr in mass% from the interface to a center in the thickness direction from the interface to the surface,
the Dv is a maximum concentration of V in mass% from the interface to a center in the thickness direction from the interface to the surface,
the Bc is an average concentration of C in mass% in the center portion of the coating,
the Amg is a maximum concentration of Mg in mass% in the boundary region of the coating,

the Bmg is an average concentration of Mg in mass% in the center portion of the coating,

the Af is a maximum concentration of F in mass% in the boundary region of the coating,

the Bf is an average concentration of F in mass% in the center portion of the coating,

the Bsi is an average concentration of Si in mass% in the center portion of the coating, and

the M is a constant that is 1 when the plating layer has a Mg concentration of 0 mass% or more and less than 1.0 mass% and is 2 when the plating layer has a Mg concentration of 1.0 mass% or more and less than 4.0 mass%.

[2] The surface-treated steel sheet according to [1] may further satisfy the following formula (13):

$$0 \leq \mathrm{Cmg} < 5.0 \quad (13)$$

wherein the Cmg is a concentration of Mg in mass% at a position of 10 nm on the side of the plating layer from the interface in the thickness direction of the plating layer.

[3] The surface-treated steel sheet according to [1] or [2] may further satisfy the following formulas (14) to (16):

$$5.0 \leq \mathrm{Aal} \leq 20.0 \quad (14)$$

$$0.2 \leq \mathrm{Bal} \leq 5.0 \quad (15)$$

$$\mathrm{Aal/Bal} \geq 5.0 \quad (16)$$

wherein the Aal is a maximum concentration of Al in mass% in the boundary region, and the Bal is an average concentration of Al in mass% in the center portion of the coating.

[4] The surface-treated steel sheet according to any one of [1] to [3] may further satisfy the following formulas (17) to (18):

$$10.0 \leq \mathrm{Ap} \leq 25.0 \quad (17)$$

$$0.5 \leq \mathrm{Bp} \leq 8.0 \quad (18)$$

wherein the Ap is a maximum concentration of P in mass% in the boundary region, and the Bp is an average concentration of P in mass% in the center portion of the coating.

[5] The surface-treated steel sheet according to any one of [1] to [4] may further satisfy the following formula (19):

$$1.0 \leq \mathrm{Bzn} \leq 30.0 \quad (19)$$

wherein the Bzn is an average concentration of Zn in mass% in the center portion of the coating.

[6] The surface-treated steel sheet according to any one of [1] to [5] may further satisfy the following formula (20):

$$\mathrm{Af/Bf} \geq 2.5 \quad (20).$$

Advantageous Effects of Invention

According to the above-described aspect of the present invention, it is possible to provide a surface-treated steel sheet exceptional in corrosion resistance and conductivity.

BRIEF DESCRIPTION OF DRAWINGS

[FIG. 1] A schematic view illustrating an example of a cross section of a surface-treated steel sheet according to the present embodiment.

[FIG. 2] A diagram showing an example of elemental analysis results in the thickness direction obtained using FE-TEM with an energy dispersive X-ray analyzer.

DESCRIPTION OF EMBODIMENTS

A surface-treated steel sheet according to an embodiment of the present invention (surface-treated steel sheet according to the present embodiment) will be described. In a range of numerical value limitation with "to" interposed therebetween described below, the values at both ends are included in the range as the lower limit and the upper limit. On the other hand, a numerical value indicated as "more than" or "less than" is not included in the numerical value range. Also, the unit of the ratio (for example, Amg/Bmg, which is the ratio of Amg to Bmg described later) is all dimensionless.

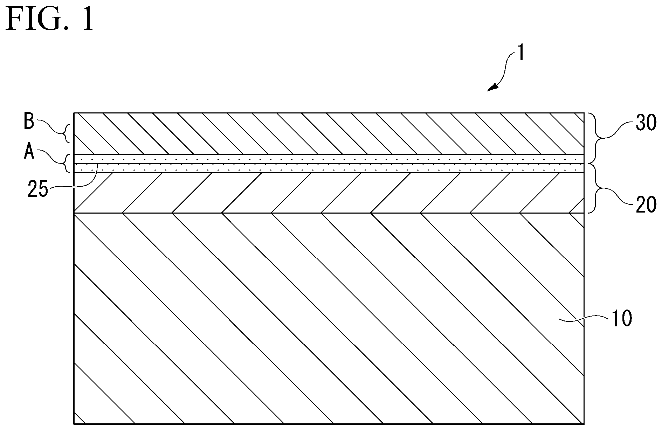

As shown in FIG. 1, a surface-treated steel sheet 1 according to the present embodiment has a base steel sheet 10, a plating layer 20 formed on a surface of the base steel sheet 10, and a coating 30 formed on a surface of the plating layer 20. The plating layer 20 is a zinc-plated layer or a zinc alloy-plated layer having 0% or more and less than 4.0% of Mg. From the viewpoint of conductivity, it is not preferable to have a coating further containing an organic resin on the coating 30. Therefore, the surface-treated steel sheet 1 may consist of the base steel sheet 10, the plating layer 20 formed on the surface of the base steel sheet 10, and the coating 30 formed on the surface of the plating layer 20. The coating 30 is, for example, a chemical conversion coating.

Also, in the present embodiment, when the concentration (concentration distribution) of C, O, F, Mg, Al, Si, P, Ti, V, Zn, and Zr is continuously measured from the plating layer toward a surface of the surface-treated steel sheet by line analysis in the thickness direction, a position where the concentration of Zn becomes 35.0 mass% or less for the first time is defined as an interface 25 between the plating layer 20 and the coating 30.

In addition, a region including the interface 25 in the range of 10 nm on the side of the plating layer 20 and the range of 15 nm on the side of the coating 30 from the interface 25 in the thickness direction is defined as a boundary region A.

The plating layer 20 and the coating 30 may be formed on one surface or both surfaces of the base steel sheet 10.

The line analysis is performed using FE-TEM (Field Emission-Transmission Electron Microscope) with an energy dispersive X-ray analyzer under the following conditions, for example.

A test piece is cut out from the surface-treated steel sheet on which a coating is formed by a cryogenic focused ion beam (FIB) method, and a cross section structure of the obtained test piece is observed with a transmission electron microscope (TEM) at a magnification at which the entire coating and a part of the Zn phase of the plating layer fall within the observed visual field (100,000 to 1,000,000 times). In order to specify the constituent elements of each layer, the concentration of C, O, F, Mg, Al, Si, P, Ti, V, Zn, and Zr is continuously measured from the plating layer toward a surface of the coating, which is also a surface of the surface-treated steel sheet, in the thickness direction, using TEM-EDS (Energy Dispersive X-ray Spectroscopy). The acceleration voltage at the time of observation and EDS analysis is set to 200 kV.

Since the plating layer is clearly different from the coating when observed with FE-TEM, a position clearly different from the coating can be determined to be the plating layer when observed with FE-TEM. The start point of the line analysis may be, for example, an arbitrary position of the plating layer observed by FE-TEM. In addition, even if the plating layer cannot be sufficiently identified by observation with FE-TEM, if, for example, the Zn concentration is 85 mass% or more and both the Mg concentration and the Al concentration are 1.0 mass% or less at the start point of the line analysis by EDS, the start point is certainly the plating layer, and thus it is not necessary to perform the observation with FE-TEM or the line analysis by EDS again.

The end point of the line analysis may be a position where Bmg or the like described later (average concentration of Mg or the like in the center portion B of the coating described later) can be measured and calculated. For example, the end point of the line analysis may be a position of 30%, 20%, or 10% of the thickness of the coating from the surface of the surface-treated steel sheet, or the surface of the coating (the surface of the surface-treated steel sheet), or the surface of the surface-treated steel sheet (the surface of the coating).

Although the line analysis can also be performed by EPMA, the concentration distribution of each element in the coating of the surface-treated steel sheet according to the present embodiment cannot be analyzed with high accuracy because the observation with high magnification cannot be performed by EPMA as compared with TEM. Therefore, in the present embodiment, the line analysis is performed using a FE-TEM with an energy dispersive X-ray analyzer.

Hereinafter, the base steel sheet, the plating layer, and the coating will be described.

<Base Steel Sheet>

In the surface-treated steel sheet according to the present embodiment, exceptional corrosion resistance can be obtained by the plating layer and the coating. Therefore, the base steel sheet is not particularly limited. The base steel sheet may be determined by a product to be applied, desired strength, sheet thickness, and the like, and for example, a hot-rolled soft steel sheet and a steel strip described in JIS G 3131:2018 or JIS G 3113:2018, a hot-rolled steel sheet and a steel strip for automobile structure (sometimes referred to as a hot-rolled steel sheet as a whole), a cold-rolled steel sheet and a steel strip described in JIS G 3141:2021 or JIS G 3135:2018, or a workable cold-rolled high tensile strength steel plate and a steel strip for automobiles (sometimes referred to as a cold-rolled steel sheet as a whole) can be used.

<Plating Layer>

The chemical composition of the plating layer included in the surface-treated steel sheet according to the present embodiment has a zinc (Zn) concentration (content) of 40 mass% or more and 100 mass% or less, and a Mg concentration (content) of 0 mass% or more and less than 4.0 mass%. The plating layer is a zinc-plated layer or a zinc alloy-plated layer.

Although elements other than Zn and Mg are not limited, the chemical composition of the plating layer other than Zn and Mg may be, for example, in mass%,

Al: 0% or more and less than 25.0%,
Sn: 0% or more and 20% or less,
Bi: 0% or more and less than 5.0%,
In: 0% or more and less than 2.0%,
Ca: 0% or more and 3.0% or less,
Y: 0% or more and 0.5% or less,
La: 0% or more and less than 0.5%,
Ce: 0% or more and less than 0.5%,
Si: 0% or more and less than 2.5%,
Cr: 0% or more and less than 0.25%,
Ti: 0% or more and less than 0.25%,
Ni: 0% or more and less than 0.25%,
Co: 0% or more and less than 0.25%,
V: 0% or more and less than 0.25%,
Nb: 0% or more and less than 0.25%,
Cu: 0% or more and less than 0.25%,
Mn: 0% or more and less than 0.25%,
Fe: 0% or more and 5.0% or less,
Sr: 0% or more and less than 0.5%,
Sb: 0% or more and less than 0.5%,
Pb: 0% or more and less than 0.5%,
B: 0% or more and less than 0.5%, and
the remainder: impurities.

Elements other than Zn, including Mg and Al, are all optional elements, and their lower limit is 0%. That is, the chemical composition of the plating layer may be only Zn and impurities. If necessary, the Mg concentration may be 0.1% or more, 0.5% or more, or 1.0% or more, and the Mg concentration may be 3.5% or less, 3.0% or less, or 2.5% or less. If necessary, the Al concentration may be 0.1% or more, 0.2% or more, 1.0% or more, or 4.0% or more, and the Al concentration may be 21.0% or less, 17.0% or less, or 12.0% or less. If necessary, the Zn concentration may be 50% or more, 60% or more, 70% or more, 80% or more, or 85% or more, and the Zn concentration may be less than 100%, less than 99%, less than 97%, or less than 95%.

The total concentration of impurities is preferably less than 1.0%.

The chemical composition of the plating layer can be determined by dissolving the plating layer in, for example, a 10% HCl aqueous solution containing an inhibitor that suppresses corrosion of base metal (base steel sheet) (for example, IBIT manufactured by Asahi Chemical Co., Ltd.), and performing composition analysis by ICP emission spectrometry.

The coating amount of the plating layer is not limited but is preferably 10 g/m$^2$ or more per one surface for improving corrosion resistance. On the other hand, even when the coating amount per one surface exceeds 200 g/m$^2$, corrosion resistance is saturated, and it is economically disadvantageous. Therefore, the coating amount is preferably 200 g/m$^2$ or less.

The type of the plating layer is also not limited. For example, the plating layer may be a hot-dip plating layer or an electroplating layer.

<Coating>

In the surface-treated steel sheet according to the present embodiment, the coating exists on the plating layer (a surface opposite to the base steel sheet). The coating may be referred to as a chemical conversion coating, a base treatment coating, a surface treatment coating, or the like.

In the present embodiment, the range of 10 nm from the center of the interface between the plating layer and the coating and the surface of a coating to the surface side in the thickness direction is defined as a center portion B of the coating.

As described later, the coating is a chemical conversion coating formed by applying a chemical treatment solution obtained by further adding phosphoric acid and nitric acid to an aqueous solution containing any of Ti, Zr, and V, Mg, and F, and drying the solution, and may contain any of Ti, Zr, and V, Mg, and F, and may contain P and Si. From the viewpoint of conductivity, the coating does not contain an organic resin.

In the coating included in the surface-treated steel sheet according to the present embodiment (the coating according to the present embodiment), when Dti (unit: mass%) is a maximum concentration of Ti, Dzr (unit: mass%) is a maximum concentration of Zr in mass%, and Dv (unit: mass%) is a maximum concentration of V in mass%, in a range from the interface to a center in the thickness direction from the interface to the surface, one or more selected from Dti, Dzr, and Dv are 5.0% or more, and the total of one or more is 25.0% or less. In this case, the barrier property of the coating is enhanced.

When each value is increased, the coating becomes brittle and the barrier property is deteriorated, and therefore, the total of Dti, Dzr, and Dv is preferably 20.0% or less.

That is, the surface-treated steel sheet according to the present embodiment satisfies one or more of formulas (1) to (3) and formula (4).

$$Dti \geq 5.0 \quad (1)$$

$$Dzr \geq 5.0 \quad (2)$$

$$Dv \geq 5.0 \quad (3)$$

$$Dti + Dzr + Dv \leq 25.0 \quad (4)$$

In the coating according to the present embodiment, the average concentration (Bc (unit: mass%)) of C in the center portion B of the coating described above is less than 10.0%. That is, the surface-treated steel sheet according to the present embodiment satisfies formula (5).

$$Bc < 10.0 \quad (5)$$

When Bc is 10.0% or more, the barrier property of the coating is deteriorated, and corrosion resistance is deteriorated. As described above, from the viewpoint of conductivity, the coating does not substantially contain an organic resin (1 mass% or less). There is no simple measurement method capable of confirming that the organic resin is 1 mass% or less by analysis of the coating. However, when the blending amount of the organic resin in the surface treatment solution increases, the C concentration in the coating increases. Therefore, in the present embodiment, Bc is less than 10.0% even as an index indicating that the organic resin is 1 mass% or less. In order to obtain exceptional corrosion resistance, Bc is more preferably 6.0% or less, 4.5% or less, or 3.0% or less. Since the lower limit of Bc is not limited, the lower limit of Be is 0%. If necessary, Bc may be 0.5% or more, 1.0% or more, or 1.5% or more.

In addition, in the coating according to the present embodiment, Amg (unit: mass%), which is a maximum concentration of Mg in the boundary region A, is 2.5 to 25.0%, Bmg (unit: mass%), which is an average concentration of Mg in the center portion B of the coating, is 0.5 to 5.0%, and Amg/Bmg, which is a ratio of Amg to Bmg, is 2.0 or more. That is, Mg is concentrated in the vicinity of the interface. When a predetermined amount of Mg is contained and Mg is concentrated in the vicinity of the interface, the barrier property of the coating is improved, and corrosion resistance is improved.

When Amg is less than 2.5%, Bmg is less than 0.5%, or Amg/Bmg is less than 2.0, the effect of improving corrosion resistance is not sufficiently obtained.

However, when the Mg concentration of the plating layer is less than 1.0 mass%, the effect cannot be obtained when Amg is less than 5.0%. This is because since the volume percentage of Zn in the plating structure is large, it is necessary to form a Mg-concentrated layer stronger than a plating layer containing more Mg (1.0% or more) in order to suppress generation of white rust. Therefore, when the Mg concentration of the plating layer is 0% or more and less than 1.0% in mass%, Amg is 5.0 to 25.0%.

On the other hand, when Amg is more than 25.0%, adhesion between the plating layer and the coating is reduced, and corrosion resistance decreases. When Bmg is more than 5.0%, a portion where Mg is concentrated is not formed, and corrosion resistance decreases.

That is, the surface-treated steel sheet according to the present embodiment satisfies the following formulas (6), (7), and (10).

$$5.0/M \leq Amg \leq 25.0 \quad (6)$$

$$0.5 \leq Bmg \leq 5.0 \quad (7)$$

$$Amg/Bmg \geq 2.0 \quad (10)$$

Here, M is a constant that is 1 when the Mg concentration in the chemical composition of the plating layer is 0% or more and less than 1.0% in mass% and is 2 when the Mg concentration is 1.0% or more and less than 4.0%.

If necessary, Amg may be 20.0% or less, 15.0% or less, 12.0% or less, 10.0% or less, or 8.0% or less. In particular, the upper limit of Amg may be limited only when the Mg concentration in the chemical composition of the plating layer is 1.0 mass% or more and less than 4.0 mass%, and for example, Amg may be 12.0% or less, 10.0% or less, 8.0% or less, or 6.0% or less.

Also, if necessary, Bmg may be 4.0% or less, 3.0% or less, or 2.0% or less.

The upper limit of Amg/Bmg does not need to be particularly determined, but Amg/Bmg may be 20.0 or less, 15.0 or less, or 10.0 or less. If necessary, Amg/Bmg may be 2.5 or more, 3.5 or more, or 4.5 or more.

In addition, F is also an element that enhances the barrier property of the coating, and similarly to Mg, F is contained in a predetermined amount in the coating and then concentrated in the vicinity of the interface.

Specifically, in the coating, Af (unit: mass%), which is a maximum concentration of F in the boundary region A, is 7.5 to 40.0%, Bf (unit: mass%), which is an average concentration of F in the center portion B of the coating, is 0.5 to 15.0%, and Af/Bf, which is a ratio of the Af to the Bf, is 2.0 or more.

When Af is less than 7.5%, Bf is less than 0.5%, or Af/Bf is less than 2.0, the effect of improving corrosion resistance is not sufficiently obtained.

However, when the Mg concentration of the plating layer is less than 1.0 mass%, the effect cannot be obtained when Af is less than 15.0%. This is because, since the volume percentage of Zn in the plating structure is large, it is necessary to form a F-concentrated layer stronger than a plating layer containing more Mg in order to suppress generation of white rust. Therefore, when the Mg concentration of the plating layer is 0% or more and less than 1.0% in mass%, Af is 15.0 to 40.0%.

On the other hand, when Af is more than 40.0%, excessive F inhibits the barrier property, and corrosion resistance decreases. When Bf is more than 15.0%, a portion where F is concentrated is not formed, and exceptional corrosion resistance is not obtained.

That is, the surface-treated steel sheet according to the present embodiment satisfies the following formulas (8), (9), and (11).

$$15.0/M \leq Af \leq 40.0 \quad (8)$$

$$0.5 \leq Bf \leq 15.0 \quad (9)$$

$$Af/Bf \geq 2.0 \quad (11)$$

Here, M is a constant (M=1) when the Mg concentration in the chemical composition of the plating layer is 0% or more and less than 1.0% in mass%, and is 2 (M=2) when the Mg concentration is 1.0% or more and less than 4.0%.

In addition, the following formula (20) is preferably satisfied.

$$Af/Bf \geq 2.5 \quad (20)$$

If necessary, Af may be 38.0% or less, 35.0% or less, 30.0% or less, 25.0% or less, or 20.0% or less. In particular, the upper limit of Af may be limited only when the Mg concentration in the chemical composition of the plating layer is 1.0 mass% or more and less than 4.0 mass%, and for example, Af may be 25.0% or less, 20.0% or less, 16.0% or less, or 12.0% or less.

Also, if necessary, Bf may be 12.0% or less, 10.0% or less, or 7.5% or less.

The upper limit of Af/Bf does not need to be particularly determined, but Af/Bf may be 50.0 or less, 30.0 or less, 20.0 or less, or 10.0 or less. If necessary, Af/Bf may be 3.0 or more, 3.5 or more, or 4.5 or more.

In the coating according to the present embodiment, Bsi (unit: mass%), which is an average concentration of Si in the center portion B of the coating, is less than 5.0%.

That is, the surface-treated steel sheet according to the present embodiment satisfies the following formula (12).

$$\text{Bsi} < 5.0 \quad (12)$$

When Bsi is 5.0% or more, a barrier coating is not formed, and corrosion resistance decreases. From the viewpoint of improving corrosion resistance, Bsi is more preferably 2.0% or less. If necessary, Bsi may be 1.5% or less, 1.0% or less, or 0.5% or less.

The lower limit of Bsi is 0%, but Bsi may be 0.1% or more.

In the surface-treated steel sheet according to the present embodiment, Bzn (unit: mass%), which is an average concentration of Zn in the center portion B of the coating, is preferably 1.0 to 30.0%.

That is, the surface-treated steel sheet according to the present embodiment preferably satisfies the following formula (19).

$$1.0 \leq \text{Bzn} \leq 30.0 \quad (19)$$

When the coating contains Zn, corrosion resistance is improved. When Bzn is less than 1.0%, the effect cannot be sufficiently obtained. On the other hand, when Bzn is more than 30.0%, corrosion resistance decreases, which is not preferable. If necessary, Bzn may be 25.0% or less, 21.0% or less, or 18.0% or less, and Bzn may be 1.5% or more, 2.0% or more, 3.5% or more, or 5.0% or more.

In the surface-treated steel sheet according to the present embodiment, it is preferable that Aal (unit: mass%), which is a maximum concentration of Al in the boundary region A, is 5.0 to 20.0%, Bal (unit: mass%), which is an average concentration of Al in the center portion B of the coating, is 0.2 to 5.0%, and Aal/Bal, which is a ratio of Aal to Bal, is 5.0 or more. Bal is more preferably 0.2 to 1.0%.

That is, the surface-treated steel sheet according to the present embodiment preferably satisfies the following formulas (14) to (16).

$$5.0 \leq \text{Aal} \leq 20.0 \quad (14)$$

$$0.2 \leq \text{Bal} \leq 5.0 \quad (15)$$

$$\text{Aal/Bal} \geq 5.0 \quad (16)$$

In this case, corrosion resistance (white rust resistance) is improved.

In consideration of the Al concentration in the plating layer, Aal may be 20.0% or less or 15.0% or less. Aal may be 0.5% or more, 1.0% or more, 3.0% or more, 7.0% or more, or 10.0% or more.

Bal may be 3.0% or less, 2.0% or less, or 1.0% or less, and Bal may be 0.1% or more or 0.3% or more.

The upper limit of Aal/Bal does not need to be particularly determined, but Aal/Bal may be 80.0 or less, 60.0 or less, or 30.0 or less. If necessary, Aal/Bal may be 7.0 or more, 10.0 or more, or 15.0 or more.

In addition, it is preferable that Ap (unit: mass%), which is a maximum concentration of P in the boundary region A, is 10.0 to 25.0%, and Bp (unit: mass%), which is an average concentration of P in the center portion B of the coating, is 0.5 to 8.0%.

That is, the surface-treated steel sheet according to the present embodiment preferably satisfies formulas (17) to (18).

$$10.0 \leq \text{Ap} \leq 25.0 \quad (17)$$

$$0.5 \leq \text{Bp} \leq 8.0 \quad (18)$$

In this case, corrosion resistance is improved.

The coating amount of the coating is preferably 150 to 800 mg/m$^2$. When the coating amount is less than 150 mg/m$^2$, corrosion resistance may decrease. On the other hand, when the coating amount is more than 800 mg/m$^2$, the coating becomes thick, and the corrosion resistance of the worked portion may decrease.

In addition, Cmg (unit: mass%), which is the concentration of Mg at the position closest to the plating layer (the position of 10 nm on a side of the plating layer from the interface in the thickness direction) in the boundary region A, is preferably 0% or more and less than 5.0%.

That is, the surface-treated steel sheet according to the present embodiment preferably satisfies the following formula (13).

$$0 \leq \text{Cmg} < 5.0 \quad (13)$$

In this case, cracks in plating due to working are reduced, so that worked portion corrosion resistance is improved.

<Manufacturing Method>

Next, a preferred manufacturing method for the surface-treated steel sheet according to the present embodiment will be described.

The surface-treated steel sheet according to the present embodiment can obtain the effect as long as the above-described characteristics are provided regardless of the manufacturing method, but the following manufacturing method is preferable because stable manufacturing is possible.

That is, the surface-treated steel sheet according to the present embodiment can be manufactured by a manufacturing method including the following steps.

    (I) A plating step of forming a plating layer containing zinc or a zinc alloy on a surface of a steel sheet; and
    (II) a coating forming step of forming a coating by applying a chemical treatment solution to a steel sheet having a plating layer, and heating and drying the chemical treatment solution.

[Plating Step]

In the plating step, a steel such as a steel sheet is immersed in a plating bath containing Zn or a Zn alloy, or electroplating is performed to form a plating layer on the surface. The method for forming the plating layer is not particularly limited. The plating may be performed by a normal method so that sufficient plating adhesion can be obtained.

Further, the steel sheet to be subjected to the plating step and the method for manufacturing the steel sheet are not limited. As the steel sheet to be immersed in the plating bath, for example, a hot-rolled soft steel sheet and a steel strip described in JIS G 3131:2018 or JIS G 3113:2018, a hot-rolled steel sheet and a steel strip for automobile structure, a cold-rolled steel sheet and a steel strip described in JIS G 3141:2021 or JIS G 3135:2018, or a workable cold-rolled high tensile strength steel plate and a steel strip for automobiles can be used.

The composition of the plating bath may be adjusted according to the chemical composition of the plating layer to be obtained.

After the steel is pulled up from the plating bath, the coating amount of the plating layer can be adjusted by wiping as necessary.

When Cmg is 0% or more and less than 5.0%, the Mg concentration in the plating layer is preferably 0 mass% or more and 3.0 mass% or less.

When Aal/Bal is 5.0 or more, the Al concentration in the plating layer is preferably 0.1 mass% or more.

[Coating Forming Step]

In this step, a chemical treatment solution is applied to a steel sheet having a plating layer, and heated and dried to form a coating (chemical conversion coating).

When the coating according to the present embodiment is formed, the chemical treatment solution is a treatment solution in which an aqueous solution containing any of Ti, Zr, and V, Mg, and F, and containing Si as necessary, and phosphoric acid and nitric acid are further added.

By applying such a treatment solution, a specific element can be concentrated at the interface between the plating layer and the coating.

Specifically, the element concentrations and the concentrations of phosphoric acid and nitric acid in the chemical treatment solution are set as follows. Here, the concentrations of phosphoric acid and nitric acid do not include the concentrations of phosphate, nitrate, and the like. When phosphoric acid and nitric acid are simultaneously contained in the above-mentioned ranges, dissolution of plating proceeds, and a specific substance is concentrated at the interface between the chemical conversion coating and the plating, whereby the effect of improving adhesion is greatly improved.

    Any one or more of Ti, V, and Zr: 5.0 to 20.0 g/L
    Mg: 0.7 to 7.0 g/L

F: 14.4 to 46.1 g/L
P: 6.8 to 32.9 g/L
Si: 0.0 to 0.4 g/L
Phosphoric acid: 10.0 to 80.0 g/L
Nitric acid: 5.0 to 40.0 g/L

When Ap and Bp are in predetermined ranges, the P concentration in the chemical treatment solution is preferably 10.0 g/L or more.

Also, when Bzn is 1.0 to 30.0% from the viewpoint of improving corrosion resistance, the Zn concentration in the treatment solution is preferably 0.5 to 5.0 g/L on a mass basis by controlling the contact time between the treatment solution and the plated steel sheet when the chemical treatment solution is applied by a roll coater. The Zn concentration can be adjusted by immersing the plated steel sheet in a treatment solution or adding Zn powder. In order to increase Bzn, Zn powder, a Zn compound, or the like may be added to the chemical treatment solution. Even when Zn powder, a Zn compound, or the like is not added to the chemical treatment solution, Bzn is often not 0% because Zn is diffused from the plating layer.

Examples of Mg to be contained in the chemical treatment solution include magnesium fluoride, magnesium nitrate, magnesium sulfate, magnesium chloride, and magnesium acetate.

Examples of F to be contained in the chemical treatment solution include compounds such as hydrofluoric acid HF, fluoroboric acid $BF_4H$, fluorosilicic acid $H_2SiF_6$, hexafluorozirconic acid $H_2ZrF_6$, and titanium hydrofluoric acid $H_2TiF_6$. The compound may be one type or a combination of two or more types. Among these, hydrofluoric acid is more preferable. When hydrofluoric acid is used, more exceptional corrosion resistance and coatability can be obtained.

When Zr is contained in the chemical treatment solution, examples of the Zr compound include ammonium zirconium carbonate, hexafluorozirconium hydroacid, and zirconium ammonium hexafluoride.

Also, when V is contained in the chemical treatment solution, examples of the V compound include vanadium pentoxide $V_2O_5$, metavanadic acid $HVO_3$, ammonium metavanadate, sodium metavanadate, vanadium oxytrichloride $VOCl_3$, vanadium trioxide $V_2O_3$, vanadium dioxide $VO_2$, vanadium oxysulfate $VOSO_4$, vanadium oxyacetylacetonate $VO(OC(=CH_2)CH_2COCH_3))_2$, vanadium acetylacetonate $V(OC(=CH_2)CH_2COCH_3))_3$, vanadium trichloride $VCl_3$, and phosphovanadomolybdic acid. It is also possible to use compounds obtained by reducing a pentavalent vanadium compound to tetravalence to divalence with an organic compound having at least one functional group selected from the group consisting of a hydroxyl group, a carbonyl group, carboxylic acid, a primary to tertiary amino group, an amide group, a phosphate group, and a phosphonic acid group.

In addition, when Ti is contained in the chemical treatment solution, examples of the Ti compound include ammonium hexafluorotitanate, titanium hydrofluoric acid, and titanium nitrate.

The method for applying the chemical treatment solution is not limited. For example, the chemical treatment solution can be applied using a roll coater, a bar coater, a spray, or the like.

After the chemical treatment solution is applied, the chemical treatment solution is heated to the maximum heating temperature (maximum attainment temperature (PMT)) and dried within 5 seconds after the application. The average temperature rising rate to PMT - 10°C during heating is preferably 5 to 50°C/s.

In a case where Aal/Bal is controlled to be 5.0 or more, it is preferable that heating is performed in two stages, and the temperature rising rate in the latter half is faster than the temperature rising rate in the first half. Specifically, when the time from the start of heating until the temperature reaches a temperature 10°C lower than the maximum heating temperature (PMT) (PMT - 10°C) is defined as t, it is preferable that an average temperature rising rate V2 in the latter half of 0.5 t to 1.0 t from the start of heating is 1.25 times or more an average temperature rising rate V1 in the first half of 0.5 t from the start of heating, that is, V2/V1≥1.25. Furthermore, when two-stage heating is performed so that Aal/Bal is 5.0 or more, the temperature rising rate V1 in the first half is preferably 5°C/s or more.

In addition, when the in-furnace time for heating and drying is long, F tends to be concentrated in the vicinity of the interface, and thus Af/Bf increases. For example, when the in-furnace time is 15 seconds or more, Af/Bf can be 2.5 or more.

Also, in heating, it is preferable to blow to the steel sheet through a punching metal (a steel sheet having a plurality of through-holes).

Examples

Metal sheets (plated steel sheets) having plating having a plating layer composition shown in Table 1 were prepared. The coating amount of the plating layer was 70 g/m$^2$. A metal sheet No. 1 was prepared by electroplating, metal sheets Nos. 2 to 8 were prepared by hot-dip plating, and a metal sheet No. 4 was prepared by heat treatment (alloying treatment) after hot-dip plating. In Table 1, for example, 99.6%Zn-0.2%Al indicates a composition containing 99.6% of Zn and 0.2% of Al, and the same applies to the others. The remainder of the plating layer composition is impurities.

As a substrate of the plated steel sheet, a cold-rolled steel sheet satisfying JIS G3141:2021 was used.

[Table 1]

| Metal sheet No. | Plating layer composition (mass%) |
|---|---|
| 1 | Zn(99.8%) |
| 2 | 99.6%Zn-0.2%Al |
| 3 | 97.8%Zn-0.2%Al-0.8%Mg |
| 4 | 90.2%Zn-9.0%Fe |
| 5 | 98.2%Zn-0.2%Al-1.2%Mg |
| 6 | 90.8%Zn-6.0%Al-3.0%Mg |
| 7 | 87.8%Zn-11.0%Al-3.0%Mg |
| 8 | 85.0%Zn-11.0%Al-3.8%Mg |

A chemical treatment solution having a composition shown in Tables 4-1, 4-2, and 5 was applied to the plated steel sheet. The chemical treatment solution was applied with a roll coater. Note that, in Nos. 48 and 118, the chemical treatment solution contained 1.1 wt% of a polyurethane resin as an organic resin component.

The element concentration in the chemical treatment solution was adjusted by mixing $(NH_4)_2TiF_6$, $(NH_4)_2ZrF_6$, $V_2O_5$, $MgHPO_4 \cdot 3H_2O$, $H_3PO_4$, $NH_4F$, $HNO_3$, $Ca(NO_3)_2 \cdot 4H_2O$, $C_5Hi_{12}O_3Si$ (vinyltrimethoxysilane) as necessary, as shown in Table 2-1, Table 2-2, and Table 3.

After the chemical treatment solution was applied, hot blast was blown onto the steel sheet through a punching metal (steel sheet having a plurality of through-holes) within 5 seconds to heat the steel sheet to the sheet temperature at drying (PMT) in Tables 4-1, 4-2, and 5 under the conditions in Tables 4-1, 4-2, and 5, and then the steel sheet was cooled to 20°C by air cooling by blowing air through the punching metal or water cooling. As a result, surface-treated steel sheets Nos. 1 to 50 and 101 to 120 were obtained.

In Tables 4-1, 4-2, and 5, "Temperature rising rate V1" is an average temperature rising rate in the first half of the time until the temperature reaches a temperature 10°C lower than the maximum heating temperature (PMT) (PMT - 10°C), and "Temperature rising rate V2" is an average temperature rising rate in the latter half of the time until the temperature reaches a temperature 10°C lower than the maximum heating temperature (PMT) (PMT - 10°C).

The coating amount of the chemical conversion coating was 400 mg/m² except for No. 40 and No. 41. No. 40 was 150 mg/m², and No. 41 was 800 mg/m².

[Table 2-1]

| Test No. | Reagent composition of chemical treatment solution (g/L) | | | | | | | | |
|---|---|---|---|---|---|---|---|---|---|
| | $(NH_4)_2TiF_6$ | $(NH_4)_2ZrF_6$ | $V_2O_5$ | $MgHPO_4 \cdot 3H_2O$ | $H_3PO_4$ | $NH_4F$ | $HNO_3$ | $Ca(NO_3)_2 \cdot 4H_2O$ | $C_5H_{12}O_3Si$ |
| 1 | 50 | - | - | 15 | 65 | - | 5 | - | - |
| 2 | 35 | - | - | 10 | 25 | - | 15 | - | - |
| 3 | 30 | - | - | 30 | 65 | - | 5 | - | - |
| 4 | 70 | - | - | 20 | 55 | - | 10 | - | - |
| 5 | 65 | - | - | 20 | 40 | - | 10 | - | - |
| 6 | 40 | - | - | 10 | 30 | - | 20 | - | - |
| 7 | 40 | - | - | 20 | 35 | - | 5 | - | - |
| 8 | 75 | - | - | 50 | 10 | - | 15 | - | - |
| 9 | 70 | - | - | 50 | 75 | 10 | 10 | - | - |
| 10 | 70 | - | - | 20 | 80 | - | 20 | - | - |
| 11 | 50 | - | - | 20 | 20 | - | 20 | - | - |
| 12 | 25 | - | - | 30 | 30 | - | 10 | - | - |
| 13 | 80 | - | - | 10 | 20 | - | 20 | - | - |
| 14 | - | 35 | - | 30 | 20 | 25 | 40 | - | - |
| 15 | 45 | - | 20 | 10 | 20 | - | 20 | - | - |

(continued)

| Test No. | Reagent composition of chemical treatment solution (g/L) | | | | | | | | |
|---|---|---|---|---|---|---|---|---|---|
| | (NH$_4$)$_2$TiF$_6$ | (NH$_4$)$_2$ZrF$_6$ | V$_2$O$_5$ | MgHPO$_4$•3H$_2$O | H$_3$PO$_4$ | NH$_4$F | HNO$_3$ | Ca(NO$_3$)$_2$•4H$_2$O | C$_5$H$_{12}$O$_3$Si |
| 16 | 40 | 13 | - | 20 | 35 | - | 20 | - | - |
| 17 | 55 | - | - | 30 | 45 | - | 20 | - | - |
| 18 | 50 | - | - | 20 | 10 | - | 5 | - | - |
| 19 | 35 | - | - | 20 | 30 | - | 30 | - | - |
| 20 | 70 | - | - | 20 | 40 | - | 15 | - | - |
| 21 | 65 | - | - | 20 | 40 | - | 15 | - | - |
| 22 | 45 | - | - | 40 | 40 | - | 15 | - | - |
| 23 | 30 | 15 | 20 | 10 | 20 | - | 20 | - | - |
| 24 | 20 | - | - | 22 | 20 | - | 10 | - | - |
| 25 | 50 | - | - | 5 | 65 | - | - | - | - |

[Table 2-2]

| Test No. | Reagent composition of chemical treatment solution (g/L) | | | | | | | | |
|---|---|---|---|---|---|---|---|---|---|
| | (NH$_4$)$_2$TiF$_6$ | (NH$_4$)$_2$ZrF$_6$ | V$_2$O$_5$ | MgHPO$_4$•3H$_2$O | H$_3$PO$_4$ | NH$_4$F | HNO$_3$ | Ca(NO$_3$)$_2$•4H$_2$O | C$_5$H$_{12}$O$_3$Si |
| 26 | 35 | - | - | 30 | 45 | - | - | - | - |
| 27 | 35 | - | - | 20 | - | - | 30 | - | - |
| 28 | 35 | - | - | 30 | - | - | 55 | - | - |
| 29 | 35 | - | - | 30 | - | 30 | 50 | - | - |
| 30 | 35 | - | - | 30 | - | - | 20 | - | - |
| 31 | 35 | - | - | 20 | - | - | 70 | - | - |
| 32 | 45 | - | - | 5 | 40 | - | - | - | - |
| 33 | 60 | - | - | 5 | 1 | - | 55 | - | - |
| 34 | 75 | - | - | 20 | - | - | 40 | - | - |
| 35 | 77 | - | - | 55 | 70 | - | - | - | - |
| 36 | 30 | - | - | 30 | - | - | 30 | - | - |
| 37 | 50 | - | - | 20 | 50 | - | 15 | - | 15.9 |
| 38 | 30 | - | - | 20 | - | - | 5 | - | - |
| 39 | 25 | 15 | 10 | 20 | 50 | 20 | - | - | - |
| 40 | 65 | - | - | 15 | 35 | - | 10 | - | - |
| 41 | 65 | - | - | 15 | 30 | - | 10 | - | - |
| 42 | 70 | - | - | 15 | 45 | - | 10 | - | - |
| 43 | 60 | - | - | 20 | - | - | - | - | - |
| 44 | 60 | - | - | 15 | - | - | 55 | 71 | - |
| 45 | 60 | - | - | 5 | 30 | - | 2 | - | - |
| 46 | 60 | - | - | 5 | 81 | - | 30 | - | - |
| 47 | 60 | - | - | 5 | 20 | - | 50 | - | - |
| 48 | 60 | - | - | 20 | 5 | - | 30 | - | - |
| 49 | - | 53 | - | 7 | 58 | - | - | - | - |

(continued)

| Test No. | Reagent composition of chemical treatment solution (g/L) | | | | | | | | |
|---|---|---|---|---|---|---|---|---|---|
| | $(NH_4)_2TiF_6$ | $(NH_4)_2ZrF_6$ | $V_2O_5$ | $MgHPO_4 \cdot 3H_2O$ | $H_3PO_4$ | $NH_4F$ | $HNO_3$ | $Ca(NO_3)_2 \cdot 4H_2O$ | $C_5H_{12}O_3Si$ |
| 50 | 45 | - | - | 20 | 10 | - | 40 | - | 2 |

[Table 3]

| Test No. | Reagent composition of chemical treatment solution (g/L) | | | | | | | | |
|---|---|---|---|---|---|---|---|---|---|
| | $(NH_4)_2TiF_6$ | $(NH_4)_2ZrF_6$ | $V_2O_5$ | $MgHPO_4 \cdot 3H_2O$ | $H_3PO_4$ | $NH_4F$ | $HNO_3$ | $Ca(NO_3)_2 \cdot 4H_2O$ | $C_5H_{12}O_3Si$ |
| 101 | 30 | - | - | 7 | 20 | - | 20 | - | - |
| 102 | 30 | - | - | 20 | 30 | - | 20 | - | - |
| 103 | 30 | - | - | 20 | 30 | - | 20 | - | - |
| 104 | 25 | - | - | 5 | 20 | - | 15 | - | - |
| 105 | 25 | - | - | 20 | 20 | - | 20 | - | - |
| 106 | 25 | - | - | 15 | 20 | - | 20 | - | - |
| 107 | 35 | - | - | 55 | 30 | - | 2 | - | - |
| 108 | 45 | - | - | 20 | - | - | 40 | - | - |
| 109 | 35 | - | - | 20 | 30 | - | - | - | - |
| 110 | 60 | - | - | 30 | - | - | 35 | - | - |
| 111 | 30 | - | - | 30 | 30 | - | - | - | - |
| 112 | 45 | - | - | 20 | - | - | 15 | - | - |
| 113 | 60 | - | - | 20 | - | - | - | - | - |
| 114 | 60 | - | - | 15 | - | - | 55 | 71 | - |
| 115 | 60 | - | - | 5 | 30 | - | 2 | - | - |
| 116 | 60 | - | - | 5 | 81 | - | 30 | - | - |
| 117 | 60 | - | - | 5 | 20 | - | 50 | - | - |
| 118 | 60 | - | - | 20 | 5 | - | 30 | - | - |
| 119 | - | 53 | - | 7 | 58 | - | - | - | - |
| 120 | 45 | - | - | 20 | 10 | - | 40 | - | 2 |

[Table 4-1]

| Test No. | Metal sheet No. | Concentration in treatment solution | | | | | | | | | | Drying conditions | | | | |
|---|---|---|---|---|---|---|---|---|---|---|---|---|---|---|---|---|
| | | Ti (g/L) | Zr (g/L) | V (g/L) | Mg (g/L) | P (g/L) | F (g/L) | Si (g/L) | Phosphoric acid (g/L) | Nitric acid (g/L) | Zn (g/L) | Temperature rising rate V1 (°C/s) | Temperature rising rate V2 (°C/s) | V2/V1 | In-furnace time (s) | PMT (°C) |
| 1 | 1 | 12.1 | 0.0 | 0.0 | 2.1 | 23.4 | 28.8 | 0.0 | 65.0 | 5.0 | 1.1 | 5.3 | 8.0 | 1.51 | 15.0 | 100 |
| 2 | 2 | 8.5 | 0.0 | 0.0 | 1.4 | 9.8 | 20.2 | 0.0 | 25.0 | 15.0 | 1.2 | 8.0 | 12.0 | 1.50 | 15.0 | 150 |
| 3 | 3 | 7.3 | 0.0 | 0.0 | 4.2 | 26.1 | 17.3 | 0.0 | 65.0 | 5.0 | 2.1 | 6.7 | 9.3 | 1.39 | 15.0 | 120 |
| 4 | 2 | 16.9 | 0.0 | 0.0 | 2.8 | 21.1 | 40.3 | 0.0 | 55.0 | 10.0 | 2.3 | 8.0 | 12.0 | 1.50 | 15.0 | 150 |
| 5 | 2 | 15.7 | 0.0 | 0.0 | 2.8 | 16.3 | 37.4 | 0.0 | 40.0 | 10.0 | 2.6 | 6.7 | 9.3 | 1.39 | 15.0 | 120 |
| 6 | 3 | 9.7 | 0.0 | 0.0 | 1.4 | 11.4 | 23.0 | 0.0 | 30.0 | 20.0 | 0.7 | 6.7 | 9.3 | 1.39 | 15.0 | 120 |
| 7 | 1 | 9.7 | 0.0 | 0.0 | 2.8 | 14.7 | 23.0 | 0.0 | 35.0 | 5.0 | 1.1 | 6.7 | 9.3 | 1.39 | 15.0 | 120 |
| 8 | 1 | 18.1 | 0.0 | 0.0 | 7.0 | 12.1 | 43.2 | 0.0 | 10.0 | 15.0 | 0.6 | 6.7 | 9.3 | 1.39 | 15.0 | 120 |
| 9 | 2 | 16.9 | 0.0 | 0.0 | 7.0 | 32.9 | 45.4 | 0.0 | 75.0 | 10.0 | 4.4 | 6.7 | 9.3 | 1.39 | 15.0 | 120 |
| 10 | 2 | 16.9 | 0.0 | 0.0 | 2.8 | 29.1 | 40.3 | 0.0 | 80.0 | 20.0 | 4.7 | 6.7 | 9.3 | 1.39 | 15.0 | 120 |
| 11 | 3 | 12.1 | 0.0 | 0.0 | 2.8 | 9.9 | 28.8 | 0.0 | 20.0 | 20.0 | 1.9 | 6.7 | 9.3 | 1.39 | 15.0 | 120 |
| 12 | 2 | 6.0 | 0.0 | 0.0 | 4.2 | 14.9 | 14.4 | 0.0 | 30.0 | 10.0 | 1.7 | 6.7 | 9.3 | 1.39 | 15.0 | 120 |
| 13 | 1 | 19.4 | 0.0 | 0.0 | 1.4 | 8.2 | 46.1 | 0.0 | 20.0 | 20.0 | 2.0 | 10.7 | 16.0 | 1.50 | 15.0 | 200 |
| 14 | 2 | 0.0 | 13.2 | 0.0 | 4.2 | 11.7 | 29.4 | 0.0 | 20.0 | 40.0 | 4.1 | 12.0 | 18.7 | 1.56 | 15.0 | 230 |
| 15 | 2 | 10.9 | 0.0 | 11.2 | 1.4 | 8.2 | 25.9 | 0.0 | 20.0 | 20.0 | 3.8 | 13.3 | 20.0 | 1.50 | 15.0 | 250 |
| 16 | 1 | 9.7 | 4.9 | 0.0 | 2.8 | 14.7 | 29.2 | 0.0 | 35.0 | 20.0 | 3.9 | 14.3 | 20.0 | 1.40 | 7.0 | 120 |
| 17 | 4 | 13.3 | 0.0 | 0.0 | 4.2 | 19.7 | 31.7 | 0.0 | 45.0 | 20.0 | 3.2 | 6.7 | 9.3 | 1.39 | 15.0 | 120 |
| 18 | 2 | 12.1 | 0.0 | 0.0 | 2.8 | 6.8 | 28.8 | 0.0 | 10.0 | 5.0 | 2.6 | 16.7 | 16.7 | 1.00 | 15.0 | 250 |
| 19 | 3 | 8.5 | 0.0 | 0.0 | 2.8 | 13.1 | 20.2 | 0.0 | 30.0 | 30.0 | 3.2 | 8.0 | 8.0 | 1.00 | 15.0 | 120 |
| 20 | 2 | 16.9 | 0.0 | 0.0 | 2.8 | 16.3 | 40.3 | 0.0 | 40.0 | 15.0 | 0.4 | 14.3 | 20.0 | 1.40 | 7.0 | 120 |
| 21 | 2 | 15.7 | 0.0 | 0.0 | 2.8 | 16.3 | 37.4 | 0.0 | 40.0 | 15.0 | 5.5 | 14.3 | 20.0 | 1.40 | 7.0 | 120 |
| 22 | 3 | 10.9 | 0.0 | 0.0 | 5.6 | 19.9 | 25.9 | 0.0 | 40.0 | 15.0 | 0.7 | 10.7 | 16.0 | 1.50 | 15.0 | 200 |
| 23 | 1 | 7.3 | 5.7 | 11.2 | 1.4 | 8.2 | 17.3 | 0.0 | 20.0 | 20.0 | 1.4 | 6.7 | 9.3 | 1.39 | 15.0 | 120 |
| 24 | 1 | 4.8 | 0.0 | 0.0 | 3.1 | 10.3 | 11.5 | 0.0 | 20.0 | 10.0 | 1.0 | 6.7 | 9.3 | 1.39 | 15.0 | 120 |

| Test No. | Metal sheet No. | Concentration in treatment solution | | | | | | | | | | Drying conditions | | | | |
|---|---|---|---|---|---|---|---|---|---|---|---|---|---|---|---|---|
| | | Ti (g/L) | Zr (g/L) | V (g/L) | Mg (g/L) | P (g/L) | F (g/L) | Si (g/L) | Phosphoric acid (g/L) | Nitric acid (g/L) | Zn (g/L) | Temperature rising rate V1 (°C/s) | Temperature rising rate V2 (°C/s) | V2/V1 | In-furnace time (s) | PMT (°C) |
| 25 | 2 | 12.1 | 0.0 | 0.0 | 0.7 | 21.7 | 28.8 | 0.0 | 65..0 | 0.0 | 1.7 | 6.7 | 9.3 | 1.39 | 15.0 | 120 |

[Table 4-2]

| Test No. | Metal sheet No. | Concentration in treatment solution | | | | | | | | | | Drying conditions | | | | |
|---|---|---|---|---|---|---|---|---|---|---|---|---|---|---|---|---|
| | | Ti (g/L) | Zr (g/L) | V (g/L) | Mg (g/L) | P (g/L) | F (g/L) | Si (g/L) | Phosphoric acid (g/L) | Nitric acid (g/L) | Zn (g/L) | Temperature rising rate V1 (°C/s) | Temperature rising rate V2 (°C/s) | V2/V1 | In-furnace time (s) | PMT (°C) |
| 26 | 3 | 8.5 | 0.0 | 0.0 | 4.2 | 19.7 | 20.2 | 0.0 | 45.0 | 0.0 | 1.4 | 11.4 | 17.1 | 1.50 | 7.0 | 100 |
| 27 | 3 | 8.5 | 0.0 | 0.0 | 2.8 | 3.6 | 20.2 | 0.0 | 0.0 | 30.0 | 1.1 | 4.0 | 5.3 | 1.33 | 15.0 | 70 |
| 28 | 2 | 8.5 | 0.0 | 0.0 | 4.2 | 5.3 | 20.2 | 0.0 | - | 55.0 | 2.6 | 5.3 | 8.0 | 1.51 | 15.0 | 100 |
| 29 | 1 | 8.5 | 0.0 | 0.0 | 4.2 | 5.3 | 35.6 | 0.0 | - | 50.0 | 3.1 | 6.7 | 9.3 | 1.39 | 15.0 | 120 |
| 30 | 1 | 8.5 | 0.0 | 0.0 | 4.2 | 5.3 | 20.2 | 0.0 | 0.0 | 20.0 | 2.4 | 6.7 | 9.3 | 1.39 | 15.0 | 120 |
| 31 | 1 | 8.5 | 0.0 | 0.0 | 2.8 | 3.6 | 20.2 | 0.0 | 0.0 | 70.0 | 1.2 | 14.3 | 20.0 | 1.40 | 7.0 | 120 |
| 32 | 2 | 10.9 | 0.0 | 0.0 | 0.7 | 13.7 | 25.9 | 0.0 | 40.0 | 0.0 | 0.7 | 6.7 | 9.3 | 1.39 | 15.0 | 120 |
| 33 | 4 | 14.5 | 0.0 | 0.0 | 0.7 | 1.2 | 34.5 | 0.0 | 1.0 | 55.0 | 0.8 | 14.3 | 20.0 | 1.40 | 7.0 | 120 |
| 34 | 3 | 18.1 | 0.0 | 0.0 | 2.8 | 3.6 | 43.2 | 0.0 | 0.0 | 40.0 | 0.6 | 6.7 | 9.3 | 1.39 | 15.0 | 120 |
| 35 | 1 | 18.6 | 0.0 | 0.0 | 7.7 | 32.2 | 44.3 | 0.0 | 70.0 | 0.0 | 1.3 | 5.3 | 6.7 | 1.25 | 15.0 | 90 |
| 36 | 4 | 7.3 | 0.0 | 0.0 | 4.2 | 0.5 | 17.3 | 0.0 | 0.0 | 30.0 | 1.4 | 6.7 | 9.3 | 1.39 | 15.0 | 120 |
| 37 | 1 | 12.1 | 0.0 | 0.0 | 2.8 | 19.5 | 28.8 | 3.0 | 50.0 | 15.0 | 3.6 | 6.7 | 9.3 | 1.39 | 15.0 | 120 |
| 38 | 1 | 7.3 | 0.0 | 0.0 | 2.8 | 3.6 | 17.3 | 0.0 | 0.0 | 5.0 | 1.2 | 6.7 | 9.3 | 1.39 | 15.0 | 120 |
| 39 | 2 | 6.0 | 5.7 | 5.6 | 2.8 | 19.5 | 31.8 | 0.0 | 50.0 | 0.0 | 1.1 | 14.3 | 20.0 | 1.40 | 7.0 | 120 |
| 40 | 2 | 15.7 | 0.0 | 0.0 | 2.1 | 13.9 | 37.4 | 0.0 | 35.0 | 10.0 | 2.6 | 6.7 | 9.3 | 1.39 | 15.0 | 120 |
| 41 | 2 | 15.7 | 0.0 | 0.0 | 2.1 | 12.3 | 37.4 | 0.0 | 30.0 | 10.0 | 3.8 | 6.7 | 9.3 | 1.39 | 15.0 | 120 |
| 42 | 2 | 16.9 | 0.0 | 0.0 | 2.1 | 17.0 | 40.3 | 0.0 | 45.0 | 10.0 | 3.2 | 6.7 | 9.3 | 1.39 | 15.0 | 120 |
| 43 | 2 | 14.5 | 0.0 | 0.0 | 2.8 | 3.6 | 34.5 | 0.0 | 0.0 | 0.0 | 0.8 | 14.3 | 20.0 | 1.40 | 7.0 | 120 |
| 44 | 2 | 14.5 | 0.0 | 0.0 | 2.1 | 2.7 | 34.5 | 0.0 | 0.0 | 0.0 | 0.8 | 14.3 | 20.0 | 1.40 | 7.0 | 120 |
| 45 | 2 | 14.5 | 0.0 | 0.0 | 0.7 | 10.5 | 34.5 | 0.0 | 30.0 | 2.0 | 0.8 | 14.3 | 20.0 | 1.40 | 7.0 | 120 |
| 46 | 2 | 14.5 | 0.0 | 0.0 | 0.7 | 26.8 | 34.5 | 0.0 | 81.0 | 30.0 | 0.8 | 14.3 | 20.0 | 1.40 | 7.0 | 120 |
| 47 | 2 | 14.5 | 0.0 | 0.0 | 0.7 | 7.3 | 34.5 | 0.0 | 20.0 | 50.0 | 0.8 | 14.3 | 20.0 | 1.40 | 7.0 | 120 |
| 48 | 2 | 14.5 | 0.0 | 0.0 | 2.8 | 5.2 | 34.5 | 0.0 | 5.0 | 30.0 | 0.8 | 6.7 | 9.3 | 1.39 | 15.0 | 120 |
| 49 | 2 | 0.0 | 20.0 | 0.0 | 1.0 | 19.8 | 25.1 | 0.0 | 58.0 | 0.0 | 0.8 | 14.3 | 20.0 | 1.40 | 7.0 | 120 |

| Test No. | Metal sheet No. | Concentration in treatment solution | | | | | | | | | | Drying conditions | | | | |
|---|---|---|---|---|---|---|---|---|---|---|---|---|---|---|---|---|
| | | Ti (g/L) | Zr (g/L) | V (g/L) | Mg (g/L) | P (g/L) | F (g/L) | Si (g/L) | Phosphoric acid (g/L) | Nitric acid (g/L) | Zn (g/L) | Temperature rising rate V1 (°C/s) | Temperature rising rate V2 (°C/s) | V2/V1 | In-furnace time (s) | PMT (°C) |
| 50 | 2 | 10.9 | 0.0 | 0.0 | 2.8 | 6.8 | 25.9 | 0.4 | 10.0 | 40.0 | 0.8 | 14.3 | 20.0 | 1.40 | 7.0 | 120 |

EP 4 600 035 A1

[Table 5]

| Test No. | Metal sheet No. | Concentration in treatment solution | | | | | | | | | | Drying conditions | | | | |
|---|---|---|---|---|---|---|---|---|---|---|---|---|---|---|---|---|
| | | Ti (g/L) | Zr (g/L) | V (g/L) | Mg (g/L) | P (g/L) | F (g/L) | Si (g/L) | Phosphoric acid (g/L) | Nitric acid (g/L) | Zn (g/L) | Temperature rising rate V1 (°C/s) | Temperature rising rate V2 (°C/s) | V2/V1 | In-furnace time (s) | PMT (°C) |
| 101 | 5 | 7.3 | 0.0 | 0.0 | 1.0 | 7.6 | 17.3 | 0.0 | 20.0 | 20.0 | 3.2 | 8.0 | 12.0 | 1.50 | 15.0 | 160 |
| 102 | 6 | 7.3 | 0.0 | 0.0 | 2.8 | 13.1 | 17.3 | 0.0 | 30.0 | 20.0 | 0.9 | 10.7 | 16.0 | 1.50 | 15.0 | 170 |
| 103 | 6 | 7.3 | 0.0 | 0.0 | 2.8 | 13.1 | 17.3 | 0.0 | 30.0 | 20.0 | 0.5 | 8.0 | 12.0 | 1.50 | 15.0 | 160 |
| 104 | 7 | 6.0 | 0.0 | 0.0 | 0.7 | 7.3 | 14.4 | 0.0 | 20.0 | 15.0 | 1.1 | 17.1 | 25.7 | 1.50 | 7.0 | 160 |
| 105 | 7 | 6.0 | 0.0 | 0.0 | 2.8 | 9.9 | 14.4 | 0.0 | 20.0 | 20.0 | 2.5 | 8.0 | 12.0 | 1.50 | 15.0 | 160 |
| 106 | 8 | 6.0 | 0.0 | 0.0 | 2.1 | 9.1 | 14.4 | 0.0 | 20.0 | 20.0 | 0.6 | 8.0 | 12.0 | 1.50 | 15.0 | 160 |
| 107 | 5 | 8.5 | 0.0 | 0.0 | 7.7 | 19.4 | 20.2 | 0.0 | 30.0 | 2.0 | 1.0 | 14.3 | 20.0 | 1.40 | 7.0 | 120 |
| 108 | 5 | 10.9 | 0.0 | 0.0 | 2.8 | 3.6 | 25.9 | 0.0 | - | 40.0 | 1.3 | 7.3 | 8.7 | 1.19 | 15.0 | 140 |
| 109 | 6 | 8.5 | 0.0 | 0.0 | 2.8 | 13.1 | 20.2 | 0.0 | 30.0 | - | 0.9 | 8.0 | 12.0 | 1.50 | 15.0 | 160 |
| 110 | 6 | 14.5 | 0.0 | 0.0 | 4.2 | 5.3 | 34.5 | 0.0 | - | 35.0 | 1.1 | 6.7 | 9.3 | 1.39 | 15.0 | 120 |
| 111 | 5 | 7.3 | 0.0 | 0.0 | 4.2 | 14.9 | 17.3 | 0.0 | 30.0 | - | 1.0 | 14.3 | 20.0 | 1.40 | 7.0 | 120 |
| 112 | 5 | 10.9 | 0.0 | 0.0 | 2.8 | 3.6 | 25.9 | 0.0 | - | 15.0 | 0.8 | 14.3 | 20.0 | 1.40 | 7.0 | 120 |
| 113 | 5 | 14.5 | 0.0 | 0.0 | 2.8 | 3.6 | 34.5 | 0.0 | 0.0 | 0.0 | 0.8 | 14.3 | 20.0 | 1.40 | 7.0 | 120 |
| 114 | 6 | 14.5 | 0.0 | 0.0 | 2.1 | 2.7 | 34.5 | 0.0 | 0.0 | 0.0 | 0.8 | 14.3 | 20.0 | 1.40 | 7.0 | 120 |
| 115 | 6 | 14.5 | 0.0 | 0.0 | 0.7 | 10.5 | 34.5 | 0.0 | 30.0 | 2.0 | 0.8 | 14.3 | 20.0 | 1.40 | 7.0 | 120 |
| 116 | 6 | 14.5 | 0.0 | 0.0 | 0.7 | 26.8 | 34.5 | 0.0 | 81.0 | 30.0 | 0.8 | 14.3 | 20.0 | 1.40 | 15.0 | 120 |
| 117 | 6 | 14.5 | 0.0 | 0.0 | 0.7 | 7.3 | 34.5 | 0.0 | 20.0 | 50.0 | 0.8 | 14.3 | 20.0 | 1.40 | 7.0 | 120 |
| 118 | 7 | 14.5 | 0.0 | 0.0 | 2.8 | 5.2 | 34.5 | 0.0 | 5.0 | 30.0 | 0.8 | 6.7 | 9.3 | 1.39 | 15.0 | 120 |
| 119 | 7 | 0.0 | 20.0 | 0.0 | 1.0 | 19.8 | 25.1 | 0.0 | 58.0 | - | 0.8 | 14.3 | 20.0 | 1.40 | 7.0 | 120 |
| 120 | 7 | 10.9 | 0.0 | 0.0 | 2.8 | 6.8 | 25.9 | 0.4 | 10.0 | 40.0 | 0.8 | 14.3 | 20.0 | 1.40 | 7.0 | 120 |

A test piece was cut out from the prepared surface-treated steel sheet by a focused ion beam (FIB) processing method with a cooling function, and a cross-sectional structure of the cut out test piece was observed with a field emission-transmission electron microscope (FE-TEM) with an energy dispersive X-ray analyzer at a magnification at which the entire coating and the plating layer enter an observed visual field.

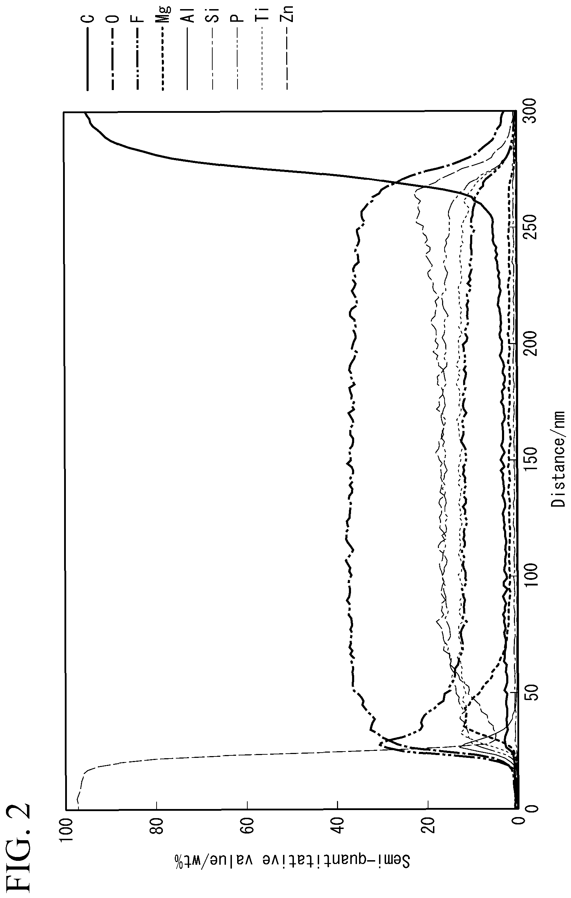

At that time, since an Al phase, an $MgZn_2$ phase, and a Zn phase were present in the plating layer, the Zn phase was confirmed by contrast (a relatively bright portion of the dark field image was determined as a Zn phase), and the concentration distribution of C, O, F, Mg, Al, Si, P, Ti, V, Zn, and Zr from the position of the Zn phase confirmed to be the plating layer, in which the concentration of Zn is 85% or more and both the Mg concentration and the Al concentration are 1.0% or less with EDS analysis, to the surface of the surface-treated steel sheet was measured by an energy dispersive X-ray analyzer. The results are shown in Table 6-1 to Table 9. **In** addition, FIG. 2 shows the depth direction element distribution measurement results for Test No. 40 of Examples.

[Table 6-1]

| Test No. | Concentration index | | | | | | | | | | |
|---|---|---|---|---|---|---|---|---|---|---|---|
| | Dti (mass%) | Dzr (mass%) | Dv (mass%) | Dti+Dzr+Dv (mass%) | Bc (mass%) | Amg (mass%) | Bmg (mass%) | Amg/Bmg | Af (mass%) | Bf (mass%) | Af/Bf |
| 1 | 15.1 | | | 15.1 | 4.2 | 9.7 | 1.3 | 7.5 | 19.8 | 6.8 | 2.9 |
| 2 | 13.2 | | | 13.2 | 3.8 | 8.2 | 1.3 | 6.3 | 15.1 | 2.0 | 7.6 |
| 3 | 11.4 | | | 11.4 | 3.2 | 11.8 | 0.8 | 14.8 | 20.7 | 5.9 | 3.5 |
| 4 | 18.1 | | | 18.1 | 2.9 | 11.3 | 1.7 | 6.5 | 21.9 | 6.3 | 3.5 |
| 5 | 16.8 | | | 16.8 | 6.2 | 9.8 | 1.5 | 6.7 | 20.2 | 7.3 | 2.8 |
| 6 | 12.9 | | | 12.9 | 5.2 | 5.0 | 0.5 | 10.0 | 15.4 | 1.3 | 11.8 |
| 7 | 14.2 | | | 14.2 | 4.3 | 5.1 | 0.6 | 8.5 | 19.4 | 3.2 | 6.1 |
| 8 | 20.2 | | | 20.2 | 4.4 | 25.0 | 4.0 | 6.3 | 24.8 | 10.0 | 2.5 |
| 9 | 17.4 | | | 17.4 | 3.7 | 24.9 | 3.9 | 6.4 | 38.9 | 14.2 | 2.7 |
| 10 | 16.6 | | | 16.6 | 4.5 | 9.5 | 1.7 | 5.6 | 19.9 | 6.9 | 2.9 |
| 11 | 11.1 | | | 11.1 | 3.1 | 5.1 | 0.6 | 8.5 | 17.3 | 4.0 | 4.3 |
| 12 | 5.4 | | | 5.4 | 3.3 | 17.7 | 2.5 | 7.1 | 16.4 | 1.2 | 13.7 |
| 13 | 25.0 | | | 25.0 | 2.4 | 6.4 | 0.7 | 9.1 | 24.9 | 8.8 | 2.8 |
| 14 | | 13.3 | | 13.3 | 3.3 | 9.9 | 1.5 | 6.6 | 23.2 | 0.6 | 38.7 |
| 15 | 14.2 | | 6.1 | 20.3 | 3.8 | 9.6 | 2.3 | 4.2 | 16.3 | 3.2 | 5.1 |
| 16 | 12.6 | 5.3 | | 17.9 | 2.2 | 8.8 | 0.7 | 12.6 | 25.1 | 12.5 | 2.0 |
| 17 | 15.8 | | | 15.8 | 2.4 | 9.8 | 2.0 | 4.9 | 32.4 | 11.3 | 2.9 |
| 18 | 11.1 | | | 11.1 | 1.3 | 7.3 | 2.4 | 3.0 | 23.1 | 3.4 | 6.8 |
| 19 | 13.6 | | | 13.6 | 2.1 | 8.7 | 1.9 | 4.6 | 17.8 | 5.7 | 3.1 |
| 20 | 19.3 | | | 19.3 | 2.5 | 11.7 | 2.3 | 5.1 | 21.1 | 8.7 | 2.4 |
| 21 | 18.6 | | | 18.6 | 2.4 | 11.9 | 2.1 | 5.7 | 20.0 | 8.5 | 2.4 |
| 22 | 10.2 | | | 10.2 | 5.7 | 19.6 | 1.9 | 10.3 | 19.3 | 4.2 | 4.6 |
| 23 | 6.8 | 5.9 | 7.2 | 19.9 | 3.1 | 7.6 | 1.6 | 4.8 | 20.7 | 5.1 | 4.1 |
| 24 | <u>4.9</u> | | | 4.9 | 2.9 | 5.7 | 0.6 | 9.5 | 16.7 | 0.5 | 33.4 |
| 25 | 15.2 | | | 15.2 | 3.3 | <u>3.2</u> | 2.7 | <u>1.2</u> | 18.3 | 6.5 | 2.8 |

EP 4 600 035 A1

22

[Table 6-2]

| Test No. | Concentration index | | | | | | | | | | |
|---|---|---|---|---|---|---|---|---|---|---|---|
| | Dti (mass%) | Dzr (mass%) | Dv (mass%) | Dti+Dzr+Dv (mass%) | Bc (mass%) | Amg (mass%) | Bmg (mass%) | Amg/Bmg | Af (mass%) | **Bf** (mass%) | Af/Bf |
| 26 | 14.1 | | | 14.1 | 3.1 | 5.4 | 4.5 | <u>1.2</u> | 16.1 | 7.7 | 2.1 |
| 27 | 14.2 | | | 14.2 | <u>10.3</u> | 11.5 | 0.7 | 16.4 | 19.9 | 6.1 | 3.3 |
| 28 | 14.0 | | | 14.0 | 3.5 | 17.4 | 2.6 | 6.7 | <u>7.2</u> | 1.2 | 6.0 |
| 29 | 13.8 | | | 13.8 | 2.2 | 9.7 | 1.6 | 6.1 | <u>41.0</u> | 9.3 | 4.4 |
| 30 | 14.5 | | | 14.5 | 2.4 | 12.3 | 1.7 | 7.2 | 15.6 | <u>0.4</u> | 39.0 |
| 31 | 13.9 | | | 13.9 | 3.2 | 5.6 | 0.5 | 11.2 | 19.2 | <u>17.1</u> | <u>1.1</u> |
| 32 | 15.3 | | | 15.3 | 2.9 | <u>1.0</u> | <u>0.4</u> | 2.5 | <u>8.4</u> | 0.6 | 14.0 |
| 33 | 18.6 | | | 18.6 | 3.1 | <u>4.8</u> | 0.9 | 5.3 | <u>12.4</u> | 7.6 | <u>1.6</u> |
| 34 | 17.9 | | | 17.9 | 2.7 | 5.1 | 0.6 | 8.5 | <u>10.1</u> | 13.2 | <u>0.8</u> |
| 35 | 19.7 | | | 19.7 | 3.4 | <u>25.4</u> | 4.2 | 6.0 | <u>13.2</u> | 4.3 | 3.1 |
| 36 | 5.7 | | | 5.7 | 2.6 | 9.8 | 1.5 | 6.7 | <u>7.0</u> | 0.8 | 8.8 |
| 37 | 10.9 | | | 10.9 | 3.4 | 10.3 | 4.1 | 2.5 | 19.4 | 3.6 | 5.4 |
| 38 | 6.1 | | | 6.1 | 2.8 | 12.1 | 1.7 | 7.1 | <u>4.7</u> | <u>0.4</u> | 11.8 |
| 39 | <u>4.9</u> | <u>4.6</u> | <u>4.8</u> | 14.3 | 2.6 | 9.7 | 1.3 | 7.5 | <u>13.0</u> | 6.8 | <u>1.9</u> |
| 40 | 12.7 | | | 12.7 | 2.9 | 12.2 | 2.1 | 5.8 | 30.7 | 12.0 | 2.6 |
| 41 | 18.5 | | | 18.6 | 2.3 | 11.9 | 1.8 | 6.6 | 20.2 | 8.1 | 2.5 |
| 42 | 19.1 | | | 19.3 | 2.6 | 10.9 | 2.2 | 5.0 | 21.0 | 8.8 | 2.4 |
| 43 | 18.6 | | | 18.6 | 3.1 | <u>4.9</u> | 0.9 | 5.4 | <u>13.0</u> | 7.7 | 1.7 |
| 44 | 18.6 | | | 18.6 | 2.9 | <u>3.7</u> | 2.4 | <u>1.5</u> | <u>11.4</u> | 7.9 | <u>1.4</u> |
| 45 | 18.6 | | | 18.6 | 2.3 | <u>4.6</u> | 2.1 | 2.2 | <u>11.2</u> | 8.1 | <u>1.4</u> |
| 46 | 18.6 | | | 18.6 | 3.0 | <u>25.6</u> | 3.1 | 8.3 | 18.0 | 7.6 | 2.4 |
| 47 | 18.6 | | | 18.6 | 2.8 | <u>4.8</u> | 0.9 | 5.3 | <u>12.4</u> | 7.5 | <u>1.7</u> |
| 48 | 18.6 | | | 18.6 | <u>11.4</u> | 5.2 | 0.8 | 6.5 | 16.0 | 6.5 | 2.5 |
| 49 | 18.6 | | | 18.6 | 3.1 | <u>4.9</u> | 0.9 | 5.4 | <u>13.7</u> | 7.6 | <u>1.8</u> |
| 50 | 18.6 | | | 18.6 | 2.2 | 6.7 | 0.9 | 7.4 | 15.8 | 7.4 | 2.1 |

EP 4 600 035 A1

[Table 7]

| Test No. | Concentration index | | | | | | | | | | |
|---|---|---|---|---|---|---|---|---|---|---|---|
| | Dti (mass%) | Dzr (mass%) | Dv (mass%) | Dti+Dzr+Dv (mass%) | Bc (mass%) | Amg (mass%) | Bmg (mass%) | Amg/Bmg | Af (mass%) | Bf (mass%) | Af/Bf |
| 101 | 7.9 | | | 7.9 | 2.1 | 2.6 | 0.8 | 3.3 | 7.7 | 1.5 | 5.1 |
| 102 | 9.3 | | | 9.3 | 1.8 | 5.2 | 2.1 | 2.5 | 10.5 | 3.3 | 3.2 |
| 103 | 17.1 | | | 17.1 | 1.3 | 4.3 | 1.9 | 2.3 | 7.9 | 2.8 | 2.8 |
| 104 | 7.0 | | | 7.0 | 1.5 | 2.8 | 0.9 | 3.1 | 11.2 | 5.1 | 2.2 |
| 105 | 5.7 | | | 5.7 | 2.2 | 6.1 | 2.2 | 2.8 | 8.2 | 2.4 | 3.4 |
| 106 | 5.5 | | | 5.5 | 2.1 | 10.3 | 4.2 | 2.5 | 8.0 | 2.4 | 3.3 |
| 107 | 14.6 | | | 14.6 | 2.1 | 2.4 | 0.7 | 3.4 | 7.9 | 3.3 | 2.4 |
| 108 | 15.1 | | | 15.1 | 3.5 | 3.3 | 1.2 | 2.8 | 7.3 | 2.1 | 3.5 |
| 109 | 14.8 | | | 14.8 | 2.9 | 2.2 | 0.6 | 3.7 | 12.4 | 4.2 | 3.0 |
| 110 | 18.2 | | | 18.2 | 4.1 | 11.6 | 3.2 | 3.6 | 7.2 | 1.7 | 4.2 |
| 111 | 8.9 | | | 8.9 | 5.7 | 2.1 | 0.9 | 2.3 | 9.2 | 4.1 | 2.2 |
| 112 | 10.5 | | | 10.5 | 3.2 | 16.2 | 3.6 | 4.5 | 7.1 | 2.9 | 2.4 |
| 113 | 18.6 | | | 18.6 | 3.1 | 4.9 | 0.9 | 5.4 | 13.0 | 7.7 | 1.7 |
| 114 | 18.6 | | | 18.6 | 2.9 | 3.7 | 2.4 | 1.5 | 11.4 | 7.9 | 1.4 |
| 115 | 18.6 | | | 18.6 | 2.3 | 4.6 | 2.1 | 2.2 | 11.2 | 8.1 | 1.4 |
| 116 | 18.6 | | | 18.6 | 3.0 | 25.6 | 3.1 | 8.3 | 18.0 | 7.6 | 2.4 |
| 117 | 18.6 | | | 18.6 | 2.8 | 4.8 | 0.9 | 5.3 | 12.4 | 7.5 | 1.7 |
| 118 | 18.6 | | | 18.6 | 11.4 | 5.2 | 0.8 | 6.5 | 16.0 | 6.5 | 2.5 |
| 119 | 18.6 | | | 18.6 | 3.1 | 4.9 | 0.9 | 5.4 | 13.7 | 7.6 | 1.8 |
| 120 | 18.6 | | | 18.6 | 2.2 | 6.7 | 0.9 | 7.4 | 15.8 | 7.4 | 2.1 |

EP 4 600 035 A1

[Table 8-1]

| Test No. | Concentration index | | | | | | | |
|---|---|---|---|---|---|---|---|---|
| | Bsi (mass%) | Cmg (mass%) | Aal (mass%) | Bal (mass%) | Aal/Bal | Ap (mass%) | Bp (mass%) | Bzn (mass%) |
| 1 | 0.1 | 2.1 | 9.6 | 0.5 | 19.2 | 20.3 | 7.2 | 11.1 |
| 2 | 0.2 | 2.7 | 12.3 | 0.3 | 41.0 | 5.2 | 0.4 | 13.4 |
| 3 | 0.1 | 1.9 | 15.4 | 0.2 | 77.0 | 19.7 | 7.9 | 18.1 |
| 4 | 0.1 | 2.2 | 14.7 | 0.4 | 36.8 | 14.3 | 18.2 | 18.9 |
| 5 | 0.0 | 2.6 | 11.3 | 0.4 | 28.3 | 15.1 | 16.4 | 22.2 |
| 6 | 0.1 | 1.9 | 10.1 | 0.2 | 50.5 | 7.2 | 0.4 | 5.1 |
| 7 | 0.3 | 1.4 | 13.2 | 0.6 | 22.0 | 10.1 | 0.5 | 4.8 |
| 8 | 0.2 | 1.8 | 12.2 | 0.2 | 61.0 | 3.1 | 12.3 | 2.0 |
| 9 | 0.1 | 2.3 | 11.1 | 0.3 | 37.0 | 25.0 | 8.0 | 28.9 |
| 10 | 0.1 | 2.7 | 16.8 | 0.5 | 33.6 | 14.8 | 15.7 | 29.8 |
| 11 | 0.1 | 2.3 | 17.0 | 1.0 | 17.0 | 5.9 | 12.2 | 14.2 |
| 12 | 0.1 | 2.8 | 17.9 | 0.8 | 22.4 | 13.9 | 0.7 | 18.2 |
| 13 | 0.1 | 1.7 | 14.5 | 0.9 | 16.1 | 7.3 | 0.6 | 17.3 |
| 14 | 0.1 | 1.6 | 16.6 | 0.7 | 23.7 | 12.4 | 0.9 | 27.1 |
| 15 | 0.0 | 2.5 | 13.0 | 0.4 | 32.5 | 5.0 | 0.3 | 25.7 |
| 16 | 0.2 | 1.5 | 12.3 | 0.3 | 41.0 | 12.2 | 11.1 | 26.6 |
| 17 | 0.2 | 2.7 | 15.5 | 0.7 | 22.1 | 14.6 | 3.1 | 20.3 |
| 18 | 0.1 | 1.9 | 0.3 | 0.2 | 1.5 | 13.7 | 0.8 | 19.8 |
| 19 | 0.0 | 2.3 | 7.1 | 3.2 | 2.2 | 10.5 | 0.6 | 23.4 |
| 20 | 0.1 | 2.6 | 14.6 | 0.6 | 24.3 | 14.4 | 1.1 | 0.6 |
| 21 | 0.1 | 2.3 | 13.0 | 0.3 | 43.3 | 14.1 | 1.5 | 31.0 |
| 22 | 0.1 | 2.1 | 13.2 | 0.8 | 16.5 | 15.7 | 2.5 | 3.2 |
| 23 | 0.2 | 2.2 | 10.4 | 0.3 | 34.7 | 11.8 | 1.4 | 10.6 |
| 24 | 0.1 | 1.2 | 13.4 | 0.6 | 22.3 | 11.2 | 6.5 | 11.3 |
| 25 | 0.2 | 2.6 | 12.1 | 0.3 | 40.3 | 19.9 | 6.8 | 19.7 |

[Table 8-2]

| Test No. | Concentration index | | | | | | | |
|---|---|---|---|---|---|---|---|---|
| | Bsi (mass%) | Cmg (mass%) | Aal (mass%) | Bal (mass%) | Aal/Bal | Ap (mass%) | Bp (mass%) | Bzn (mass%) |
| 26 | 0.1 | 2.2 | 14.3 | 0.6 | 23.8 | 13.1 | 7.8 | 11.1 |
| 27 | 0.1 | 1.6 | 15.8 | 0.2 | 79.0 | 7.2 | 0.8 | 18.0 |
| 28 | 0.1 | 2.8 | 10.3 | 0.8 | 12.9 | 13.6 | 0.9 | 21.4 |
| 29 | 0.1 | 1.8 | 12.3 | 0.5 | 24.6 | 12.0 | 10.9 | 26.5 |
| 30 | 0.2 | 1.6 | 15.4 | 0.7 | 22.0 | 6.2 | 0.9 | 24.6 |
| 31 | 0.1 | 2.1 | 14.2 | 0.8 | 17.8 | 7.2 | 11.4 | 18.4 |
| 32 | 0.1 | 1.9 | 15.6 | 0.4 | 39.0 | 21.1 | 7.7 | 10.3 |
| 33 | 0.1 | 1.7 | 16.8 | 0.3 | 56.0 | 11.7 | 0.5 | 14.2 |

(continued)

| Test No. | Concentration index | | | | | | | |
|---|---|---|---|---|---|---|---|---|
| | Bsi (mass%) | Cmg (mass%) | Aal (mass%) | Bal (mass%) | Aal/Bal | Ap (mass%) | Bp (mass%) | Bzn (mass%) |
| 34 | 0.2 | 2.3 | 17.1 | 0.3 | 57.0 | 9.7 | 0.5 | 10.2 |
| 35 | 0.1 | 1.9 | 10.2 | 0.5 | 20.4 | 25.2 | 0.6 | 18.7 |
| 36 | 0.1 | 2.0 | 15.2 | 0.3 | 50.7 | 6.7 | 0.6 | 11.4 |
| 37 | 5.1 | 2.2 | 10.8 | 0.4 | 27.0 | 24.8 | 7.9 | 25.6 |
| 38 | 0.1 | 1.7 | 16.8 | 0.3 | 56.0 | 12.3 | 0.4 | 15.9 |
| 39 | 0.0 | 1.7 | 12.3 | 0.2 | 61.5 | 16.8 | 6.2 | 13.2 |
| 40 | 0.7 | 1.1 | 13.0 | 0.2 | 81.3 | 12.8 | 15.4 | 16.9 |
| 41 | 0.2 | 2.1 | 12.2 | 0.4 | 30.5 | 13.1 | 1.3 | 18.2 |
| 42 | 0.1 | 2.0 | 14.3 | 0.7 | 20.4 | 15.2 | 1.4 | 19.3 |
| 43 | 0.1 | 1.8 | 6.7 | 0.3 | 22.3 | 14.6 | 1.2 | 13.9 |
| 44 | 0.1 | 1.7 | 6.2 | 0.3 | 20.7 | 9.8 | 0.4 | 11.3 |
| 45 | 0.1 | 1.9 | 7.7 | 0.4 | 19.3 | 9.7 | 0.5 | 14.2 |
| 46 | 0.1 | 1.6 | 15.4 | 0.3 | 51.3 | 12.2 | 0.8 | 13.3 |
| 47 | 0.1 | 1.7 | 16.8 | 0.4 | 42.0 | 10.9 | 0.5 | 14.2 |
| 48 | 0.1 | 3.2 | 12.2 | 0.5 | 24.4 | 11.4 | 0.5 | 14.2 |
| 49 | 0.1 | 2.1 | 6.8 | 0.5 | 13.6 | 10.3 | 0.5 | 14.2 |
| 50 | 3.2 | 3.3 | 9.8 | 0.4 | 24.5 | 11.7 | 0.5 | 14.2 |

[Table 9]

| Test No. | Concentration index | | | | | | | |
|---|---|---|---|---|---|---|---|---|
| | Bsi (mass%) | Cmg (mass%) | Aal (mass%) | Bal (mass%) | Aal/Bal | Ap (mass%) | Bp (mass%) | Bzn (mass%) |
| 101 | 0.2 | 2.3 | 11.3 | 0.5 | 22.6 | 13.9 | 10.0 | 20.1 |
| 102 | 0.3 | 1.3 | 14.3 | 0.3 | 47.7 | 10.0 | 0.6 | 5.1 |
| 103 | 0.1 | 2.5 | 14.1 | 0.3 | 47.0 | 15.2 | 1.1 | 1.3 |
| 104 | 0.1 | 1.1 | 8.7 | 0.4 | 21.8 | 11.1 | 7.9 | 4.6 |
| 105 | 0.2 | 2.7 | 7.2 | 0.2 | 36.0 | 12.4 | 11.2 | 21.1 |
| 106 | 0.2 | 5.2 | 7.0 | 0.2 | 35.0 | 10.0 | 11.1 | 19.8 |
| 107 | 0.2 | 2.1 | 16.4 | 0.6 | 27.3 | 13.7 | 0.8 | 10.0 |
| 108 | 0.3 | 1.9 | 16.8 | 0.9 | 18.7 | 10.5 | 0.6 | 11.2 |
| 109 | 0.1 | 2.2 | 18.3 | 0.7 | 26.1 | 14.4 | 1.1 | 5.3 |
| 110 | 0.2 | 2.6 | 9.9 | 0.9 | 11.0 | 14.1 | 1.5 | 13.3 |
| 111 | 0.1 | 2.1 | 10.3 | 0.8 | 12.9 | 10.5 | 0.6 | 7.7 |
| 112 | 0.5 | 2.4 | 17.3 | 0.9 | 19.2 | 14.1 | 7.9 | 3.6 |
| 113 | 0.1 | 1.8 | 6.7 | 0.3 | 22.3 | 14.6 | 1.2 | 13.9 |
| 114 | 0.1 | 1.7 | 6.2 | 0.3 | 20.7 | 9.8 | 0.4 | 11.3 |
| 115 | 0.1 | 1.9 | 7.7 | 0.4 | 19.3 | 9.7 | 0.5 | 14.2 |
| 116 | 0.1 | 1.6 | 15.4 | 0.3 | 51.3 | 12.2 | 0.8 | 13.3 |

(continued)

| Test No. | Concentration index | | | | | | | |
|---|---|---|---|---|---|---|---|---|
| | Bsi (mass%) | Cmg (mass%) | Aal (mass%) | Bal (mass%) | Aal/Bal | Ap (mass%) | Bp (mass%) | Bzn (mass%) |
| 117 | 0.1 | 1.7 | 16.8 | 0.4 | 42.0 | 10.9 | 0.5 | 14.2 |
| 118 | 0.1 | 3.2 | 12.2 | 0.5 | 24.4 | 11.4 | 0.5 | 14.2 |
| 119 | 0.1 | 2.1 | 6.8 | 0.5 | 13.6 | 10.3 | 0.5 | 14.2 |
| 120 | 3.2 | 3.3 | 9.8 | 0.4 | 24.5 | 11.7 | 0.5 | 14.2 |

In addition, white rust resistance (flat portion corrosion resistance), worked portion corrosion resistance, and conductivity of the flat portion (flat part) were evaluated by the following methods. The results are shown in Table 10-1, Table 10-2, and Table 11.

<Flat Portion Corrosion Resistance>

A flat sheet test piece (rectangular test piece of 70 mm × 150 mm) was subjected to a neutral salt spray test in accordance with JIS Z 2371:2015 at a salt concentration of 70 g±5 g/L for up to each of 72, 120, 168, and 240 hours, and corrosion resistance was evaluated by the state of white rust generation (area fraction) of the test piece after the test. Evaluation criteria for corrosion resistance are shown below. After 168 hours, if the evaluation criteria was SSS or SS, it was determined to have sufficient corrosion resistance.

(Evaluation criteria for corrosion resistance)

SSS: 3% or less
SS: more than 3% and 5% or less
S: more than 5% and 10% or less
A: more than 10% and 30% or less
B: more than 30% and 50% or less
C: more than 50%

<Worked Portion Corrosion Resistance (White Rust Resistance)>

The center portion of a flat sheet (rectangular test piece of 70 mm × 150 mm) was subjected to an Erichsen test (7 mm extrusion), then a salt spray test in accordance with JIS Z 2371:2015 was performed for 72 hours, and the state of white rust generation of the extruded worked portion was observed. Evaluation was performed using the same evaluation criteria as in the flat portion corrosion resistance, and a case where the evaluation criteria was SS or S was determined to have sufficient corrosion resistance.

(Evaluation criteria for corrosion resistance)

SS: more than 5% and 10% or less
S: more than 10% and 30% or less
A: more than 30% and 50% or less
B: more than 50%

<Conductivity>

Using the method A of JIS C 2550-4: 2011, the interlayer resistance coefficient was measured under the condition that the total area of ten contact electrodes was 1,000 mm$^2$.
A case where the evaluation result was A was determined to have sufficient conductivity.

(Evaluation criteria for conductivity)

A: interlayer resistance coefficient is less than 300 $\Omega \cdot mm^2$
C: interlayer resistance coefficient is 300 $\Omega \cdot mm^2$ or more

[Table 10-1]

| Test No. | Flat portion corrosion resistance | | | | Worked portion corrosion resistance | Conductivity | Category |
|---|---|---|---|---|---|---|---|
| | 72 h | 120 h | 168 h | 240 h | | | |
| 1 | SSS | SS | SS | A | SS | A | Invention Example |
| 2 | SSS | SS | SS | S | SS | A | Invention Example |
| 3 | SSS | SS | SS | A | SS | A | Invention Example |
| 4 | SSS | SS | SS | S | SS | A | Invention Example |
| 5 | SSS | SS | SS | S | SS | A | Invention Example |
| 6 | SSS | SS | SS | A | SS | A | Invention Example |
| 7 | SSS | SS | SS | A | SS | A | Invention Example |
| 8 | SSS | SS | SS | A | SS | A | Invention Example |
| 9 | SSS | SS | SS | S | SS | A | Invention Example |
| 10 | SSS | SS | SS | A | SS | A | Invention Example |
| 11 | SSS | SS | SS | A | SS | A | Invention Example |
| 12 | SSS | SS | SS | A | SS | A | Invention Example |
| 13 | SSS | SS | SS | A | SS | A | Invention Example |
| 14 | SSS | SS | SS | A | SS | A | Invention Example |
| 15 | SSS | SS | SS | S | SS | A | Invention Example |
| 16 | SSS | SS | SS | S | SS | A | Invention Example |
| 17 | SSS | SS | SS | A | S | A | Invention Example |
| 18 | SSS | SS | SS | A | SS | A | Invention Example |
| 19 | SSS | SS | SS | A | S | A | Invention Example |
| 20 | SSS | SS | SS | A | S | A | Invention Example |
| 21 | SSS | SS | SS | B | S | A | Invention Example |
| 22 | SSS | SS | SS | A | S | A | Invention Example |
| 23 | SSS | SS | SS | A | S | A | Invention Example |
| 24 | SSS | A | B | C | S | A | Comparative Example |
| 25 | SSS | SS | S | A | S | A | Comparative Example |

[Table 10-2]

| Test No. | Flat portion corrosion resistance | | | | Worked portion corrosion resistance | Conductivity | Category |
|---|---|---|---|---|---|---|---|
| | 72 h | 120 h | 168 h | 240 h | | | |
| 26 | SSS | A | A | B | S | A | Comparative Example |
| 27 | SSS | A | A | B | S | A | Comparative Example |
| 28 | SSS | A | B | C | A | A | Comparative Example |

(continued)

| Test No. | Flat portion corrosion resistance | | | | Worked portion corrosion resistance | Conductivity | Category |
|---|---|---|---|---|---|---|---|
| | 72 h | 120 h | 168 h | 240 h | | | |
| 29 | SSS | A | B | C | A | A | Comparative Example |
| 30 | SSS | SS | S | A | S | A | Comparative Example |
| 31 | SSS | SS | S | A | S | A | Comparative Example |
| 32 | SSS | A | B | C | A | A | Comparative Example |
| 33 | SSS | S | A | B | S | A | Comparative Example |
| 34 | SSS | S | A | B | S | A | Comparative Example |
| 35 | SSS | SS | S | A | S | A | Comparative Example |
| 36 | SSS | S | A | B | S | A | Comparative Example |
| 37 | SSS | SS | A | A | S | A | Comparative Example |
| 38 | SSS | S | A | B | S | A | Comparative Example |
| 39 | SSS | A | B | C | A | A | Comparative Example |
| 40 | SSS | SS | SS | S | SS | A | Invention Example |
| 41 | SSS | SS | SS | S | SS | A | Invention Example |
| 42 | SSS | SS | SS | S | SS | A | Invention Example |
| 43 | SSS | S | A | B | S | A | Comparative Example |
| 44 | SSS | S | A | B | S | A | Comparative Example |
| 45 | SSS | S | A | B | S | A | Comparative Example |
| 46 | SSS | S | A | B | S | A | Comparative Example |
| 47 | SSS | S | A | B | S | A | Comparative Example |
| 48 | SSS | S | A | B | S | C | Comparative Example |
| 49 | SSS | S | S | S | S | A | Comparative Example |
| 50 | SSS | SS | SS | S | SS | A | Invention Example |

[Table 11]

| Test No. | Flat portion corrosion resistance | | | | Worked portion corrosion resistance | Conductivity | Category |
|---|---|---|---|---|---|---|---|
| | 72 h | 120 h | 168 h | 240 h | | | |
| 101 | SSS | SSS | SS | S | SS | A | Invention Example |
| 102 | SSS | SSS | SS | S | SS | A | Invention Example |
| 103 | SSS | SSS | SS | S | SS | A | Invention Example |
| 104 | SSS | SSS | SS | S | SS | A | Invention Example |
| 105 | SSS | SSS | SS | A | SS | A | Invention Example |
| 106 | SSS | SSS | SS | S | S | A | Invention Example |
| 107 | SSS | SS | S | A | A | A | Comparative Example |
| 108 | SSS | SS | S | A | A | A | Comparative Example |
| 109 | SSS | SS | S | A | A | A | Comparative Example |
| 110 | SSS | SS | S | A | A | A | Comparative Example |
| 111 | S | S | A | B | S | A | Comparative Example |
| 112 | S | S | A | B | S | A | Comparative Example |

(continued)

| Test No. | Flat portion corrosion resistance | | | | Worked portion corrosion resistance | Conductivity | Category |
|---|---|---|---|---|---|---|---|
| | 72 h | 120 h | 168 h | 240 h | | | |
| 113 | SSS | S | A | B | S | A | Comparative Example |
| 114 | SSS | S | A | B | S | A | Comparative Example |
| 115 | SSS | S | A | B | S | A | Comparative Example |
| 116 | SSS | S | A | B | S | A | Comparative Example |
| 117 | SSS | S | A | B | S | A | Comparative Example |
| 118 | SSS | S | A | B | S | C | Comparative Example |
| 119 | SSS | S | S | S | S | A | Comparative Example |
| 120 | SSS | SS | SS | S | SS | A | Invention Example |

As can be seen from Tables 1 to 11, in Test Nos. 1 to 23, 40 to 42, 50, 101 to 106, and 120 which include a steel sheet, a plating layer, and a coating, and in which the distribution of elements defined in the present invention is achieved in the range from the plating layer to the surface of the coating, both corrosion resistance and conductivity are exceptional.

On the other hand, in Test Nos. 24 to 39, 43 to 49, and 107 to 119 in which the distribution of elements is out of the scope of the present invention, corrosion resistance is poor. Further, in No. 48 and No. 118 containing an organic resin, conductivity is also poor.

INDUSTRIAL APPLICABILITY

According to the present invention, it is possible to provide a surface-treated steel sheet exceptional in corrosion resistance and conductivity, and industrial applicability is high.

REFERENCE SIGNS LIST

1   Surface-treated steel sheet
10   Base steel sheet (steel sheet)
20   Plating layer (zinc-plated layer or alloyed zinc-plated layer)
30   Coating (chemical conversion coating)
25   Interface
A   Boundary region
B   Center portion of coating

**Claims**

1. A surface-treated steel sheet comprising:

a base steel sheet;
a plating layer formed on a surface of the base steel sheet; and
a coating formed on a surface of the plating layer,
wherein the plating layer has a Zn concentration of 40 mass% or more and 100 mass% or less and a Mg concentration of 0 mass% or more and less than 4.0 mass%, and
when the concentration of C, O, F, Mg, Al, Si, P, Ti, V, Zn, and Zr is continuously measured from the plating layer toward a surface of the surface-treated steel sheet by line analysis in a thickness direction,
a position where the concentration of Zn becomes 35.0 mass% or less for the first time is defined as an interface between the plating layer and the coating, and
a region including the interface in the range of 10 nm on the side of the plating layer and the range of 15 nm on the side of the coating from the interface in the thickness direction is defined as a boundary region, and
when the range of 10 nm from the center of the interface and a surface of the coating to the surface side in the thickness direction is defined as a center portion of the coating,

one or more of the following formulas (1) to (3) and (4) to (12) are satisfied:

$$Dti \geq 5.0 \quad (1)$$

$$Dzr \geq 5.0 \quad (2)$$

$$Dv \geq 5.0 \quad (3)$$

$$Dti + Dzr + Dv \leq 25.0 \quad (4)$$

$$Bc < 10.0 \quad (5)$$

$$5.0/M \leq Amg \leq 25.0 \quad (6)$$

$$0.5 \leq Bmg \leq 5.0 \quad (7)$$

$$15.0/M \leq Af \leq 40.0 \quad (8)$$

$$0.5 \leq Bf \leq 15.0 \quad (9)$$

$$Amg/Bmg \geq 2.0 \quad (10)$$

$$Af/Bf \geq 2.0 \quad (11)$$

$$Bsi < 5.0 \quad (12)$$

wherein the Dti is a maximum concentration of Ti in mass% from the interface to a center in the thickness direction from the interface to the surface,
the Dzr is a maximum concentration of Zr in mass% from the interface to a center in the thickness direction from the interface to the surface,
the Dv is a maximum concentration of V in mass% from the interface to a center in the thickness direction from the interface to the surface,
the Bc is an average concentration of C in mass% in the center portion of the coating,
the Amg is a maximum concentration of Mg in mass% in the boundary region of the coating,
the Bmg is an average concentration of Mg in mass% in the center portion of the coating,
the Af is a maximum concentration of F in mass% in the boundary region of the coating,
the Bf is an average concentration of F in mass% in the center portion of the coating,
the Bsi is an average concentration of Si in mass% in the center portion of the coating, and
the M is a constant that is 1 when the plating layer has a Mg concentration of 0 mass% or more and less than 1.0 mass% and is 2 when the plating layer has a Mg concentration of 1.0 mass% or more and less than 4.0 mass%.

2. The surface-treated steel sheet according to claim 1, further satisfying the following formula (13):

$$0 \leq Cmg < 5.0 \quad (13)$$

wherein the Cmg is a concentration of Mg in mass% at a position of 10 nm on the side of the plating layer from the interface in the thickness direction of the plating layer.

3. The surface-treated steel sheet according to claim 1 or 2, further satisfying the following formulas (14) to (16):

$$5.0 \le \text{Aal} \le 20.0 \quad (14)$$

$$0.2 \le \text{Bal} \le 5.0 \quad (15)$$

$$\text{Aal/Bal} \ge 5.0 \quad (16)$$

wherein the Aal is a maximum concentration of Al in mass% in the boundary region, and the Bal is an average concentration of Al in mass% in the center portion of the coating.

4. The surface-treated steel sheet according to any one of claims 1 to 3, further satisfying the following formulas (17) to (18):

$$10.0 \le \text{Ap} \le 25.0 \quad (17)$$

$$0.5 \le \text{Bp} \le 8.0 \quad (18)$$

wherein the Ap is a maximum concentration of P in mass% in the boundary region, and the Bp is an average concentration of P in mass% in the center portion of the coating.

5. The surface-treated steel sheet according to any one of claims 1 to 4, further satisfying the following formula (19):

$$1.0 \le \text{Bzn} \le 30.0 \quad (19)$$

wherein the Bzn is an average concentration of Zn in mass% in the center portion of the coating.

6. The surface-treated steel sheet according to any one of claims 1 to 5, further satisfying the following formula (20):

$$\text{Af/Bf} \ge 2.5 \quad (20).$$

FIG. 1

FIG. 2

## INTERNATIONAL SEARCH REPORT

| International application No. |
| --- |
| **PCT/JP2023/036512** |

| A. | CLASSIFICATION OF SUBJECT MATTER |
| --- | --- |

*B32B 15/01*(2006.01)i; *C23C 22/36*(2006.01)i
FI:    C23C22/36; B32B15/01 C

According to International Patent Classification (IPC) or to both national classification and IPC

| B. | FIELDS SEARCHED |
| --- | --- |

Minimum documentation searched (classification system followed by classification symbols)

B32B15/01; C23C22/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2001-247977 A (HITACHI LTD) 14 September 2001 (2001-09-14)<br>entire text | 1-6 |
| A | JP 2022-85512 A (NIPPON STEEL CORP) 08 June 2022 (2022-06-08)<br>entire text | 1-6 |
| A | JP 2021-515108 A (CHEMETALL GMBH) 17 June 2021 (2021-06-17)<br>entire text | 1-6 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/036512**

| Patent document cited in search report | | | Publication date (day/month/year) | Patent family member(s) | | | Publication date (day/month/year) |
|---|---|---|---|---|---|---|---|
| JP | 2001-247977 | A | 14 September 2001 | (Family: none) | | | |
| JP | 2022-85512 | A | 08 June 2022 | (Family: none) | | | |
| JP | 2021-515108 | A | 17 June 2021 | US | 2021/0062346 | A1 | |
| | | | | entire text | | | |
| | | | | WO | 2019/158508 | A1 | |
| | | | | CN | 111742079 | A | |
| | | | | KR | 10-2020-0121310 | A | |
| | | | | BR | 112020015010 | A | |
| | | | | RU | 2020130225 | A | |
| | | | | MX | 2020008651 | A | |

Form PCT/ISA/210 (patent family annex) (January 2015)

**REFERENCES CITED IN THE DESCRIPTION**

**Patent documents cited in the description**

- JP 2022161691 A
- JP 2022161692 A
- JP 2002194558 A

- JP 2007023309 A
- JP 2003306777 A
- JP 2012237065 A